# EUROPEAN PATENT APPLICATION

(11) **EP 4 661 338 A1**
(43) Date of publication of application: **10.12.2025**
(21) Application number: 24759430.2
(22) Date of filing: 08.01.2024
(51) Int. Cl.: H04L 9/40, H04L 9/32

(54) **VEHICLE DIAGNOSIS METHOD, SYSTEM, APPARATUS, AND ELECTRONIC DEVICE**

(30) Priority: 23.02.2023 CN 202310206739; 04.05.2023 CN 202310494995
(71) Applicant: Huawei Technologies Co., Ltd., Shenzhen, Guangdong 518129 (CN)
(72) Inventor: HU, Chongyang, Shenzhen, Guangdong 518129 (CN); MA, Siying, Shenzhen, Guangdong 518129 (CN); LI, Zhanfeng, Shenzhen, Guangdong 518129 (CN); ZHANG, Zuoqiang, Shenzhen, Guangdong 518129 (CN)
(74) Representative: Maiwald GmbH
(86) International application number: PCT/CN2024/071128
(87) International publication number: WO 2024/174751

(57) **Abstract**

This application provides a vehicle diagnostic method, system, and apparatus, and an electronic device. In the method, a vehicle may execute a first diagnostic item in collaboration with a diagnostic apparatus based on a first diagnostic key, where the first diagnostic key corresponds to a first diagnostic instruction; and execute the first diagnostic item in collaboration with the diagnostic apparatus based on a second diagnostic key, where the second diagnostic key corresponds to a second diagnostic instruction, and the second diagnostic key is different from the first diagnostic key. In this application, each time the vehicle is diagnosed, the vehicle may execute a diagnostic item in collaboration with the diagnostic apparatus by using different diagnostic keys. In this application, replay of the diagnostic key can be avoided, to ensure data security of the vehicle and security of vehicle diagnosis.

## Description

This application claims priority to Chinese Patent Application No. 202310206739.7, filed with the China National Intellectual Property Administration on February 23, 2023 and entitled "OPERATION TYPE BASED DIAGNOSTIC AUTHORIZATION METHOD", and claims priority to Chinese Patent Application No. 202310494995.0, filed with the China National Intellectual Property Administration on May 4, 2023 and entitled "VEHICLE DIAGNOSTIC METHOD, SYSTEM, APPARATUS, AND ELECTRONIC DEVICE", which are incorporated herein by reference in their entireties.

### TECHNICAL FIELD

Embodiments of this application relate to the field of vehicle technologies, and in particular, to a vehicle diagnostic method, system, and apparatus, and an electronic device.

### BACKGROUND

With rapid development of vehicles, a vehicle has a growing quantity of components, and also has increasingly powerful functions. The objective of vehicle diagnosis is to determine a faulty part of the vehicle and a fault cause.

At present, a vehicle may be returned to a factory for diagnosis by using a diagnostic apparatus, or a remote diagnosis may be performed by using a diagnostic apparatus. A same diagnostic key may be preset in the diagnostic apparatus and the vehicle. The diagnostic apparatus may initiate a diagnostic request to the vehicle based on the diagnostic key. The vehicle may verify the diagnostic request based on the preset diagnostic key. When verification on the diagnostic request succeeds, vehicle diagnosis may be performed.

In the current vehicle diagnostic method, the same diagnostic key is preset in the diagnostic apparatus and the vehicle, leading to low security.

### SUMMARY

Embodiments of this application provide a vehicle diagnostic method, system, and apparatus, and an electronic device. Each time a vehicle is diagnosed, a different diagnostic key may be used to diagnose the vehicle, and security is high.

According to a first aspect, an embodiment of this application provides a vehicle diagnostic method. The vehicle diagnostic method may be performed by a vehicle or a chip in a vehicle. The following is described by using a vehicle as an example. In the method, when a vehicle is diagnosed at one time, the vehicle may execute a first diagnostic item in collaboration with a diagnostic apparatus based on a first diagnostic key, where the first diagnostic key corresponds to a first diagnostic instruction. When the vehicle is diagnosed for another time, the vehicle may execute the first diagnostic item in collaboration with the diagnostic apparatus based on a second diagnostic key, where the second diagnostic key corresponds to a second diagnostic instruction, and the second diagnostic key is different from the first diagnostic key.

In this embodiment of this application, in a plurality of times of diagnosis on the first diagnostic item of the vehicle, the vehicle may execute the diagnostic item in collaboration with the diagnostic apparatus by using different diagnostic keys, so that the diagnostic apparatus does not perform diagnosis by using a same diagnostic key each time, and replay of the diagnostic key can be avoided, thereby ensuring security of the diagnostic key and security of vehicle diagnosis.

In a possible implementation, the first diagnostic key and the second diagnostic key may be pre-stored in the vehicle.

In a possible implementation, before executing the first diagnostic item in collaboration with the vehicle based on the first diagnostic key, the vehicle may further receive a third ciphertext, where the third ciphertext is obtained by encrypting the first diagnostic key based on a preset encryption key. In response to receiving the third ciphertext, the vehicle may decrypt the third ciphertext by using the preset encryption key, to obtain the first diagnostic key.

Similarly, before executing the first diagnostic item in collaboration with the vehicle based on the second diagnostic key, the vehicle may further receive a fourth ciphertext, where the fourth ciphertext is obtained by encrypting the second diagnostic key based on the preset encryption key. In response to receiving the fourth ciphertext, the vehicle may decrypt the fourth ciphertext by using the preset encryption key, to obtain the second diagnostic key.

In this implementation, in the plurality of times of diagnosis on the first diagnostic item of the vehicle, the vehicle may receive different diagnostic keys, and further execute the first diagnostic item in collaboration with the diagnostic apparatus by using the different diagnostic keys.

In a possible implementation, the third ciphertext is obtained by encrypting the first diagnostic key by a diagnostic authorization apparatus based on the preset encryption key, and the fourth ciphertext is obtained by encrypting the second diagnostic key by the diagnostic authorization apparatus based on the preset encryption key. The diagnostic authorization apparatus may directly send the third ciphertext and the fourth ciphertext to the vehicle. Alternatively, the diagnostic authorization apparatus may send the third ciphertext and the fourth ciphertext to the vehicle by using the diagnostic apparatus. For example, the third ciphertext and the fourth ciphertext are from the diagnostic apparatus.

In a possible implementation, the third ciphertext may be obtained by encrypting the first diagnostic key by the diagnostic apparatus based on the preset encryption key, and the fourth ciphertext may be obtained by encrypting the second diagnostic key by the diagnostic apparatus based on the preset encryption key.

In a possible implementation, that the vehicle executes the first diagnostic item in collaboration with the diagnostic apparatus based on the first diagnostic key may specifically include: The vehicle receives a third diagnostic instruction from the diagnostic apparatus, where the third diagnostic instruction includes an identifier of the first diagnostic key obtained by decrypting a first ciphertext by the diagnostic apparatus. The vehicle verifies the first diagnostic key in the third diagnostic instruction based on the first diagnostic key obtained by decrypting the third ciphertext and the identifier of the first diagnostic key. The vehicle may execute the first diagnostic item when verification succeeds. The vehicle may not execute the first diagnostic item when verification does not succeed.

In this implementation, the vehicle may verify an identity of the diagnostic apparatus by verifying the identifier of the first diagnostic key of the first diagnostic item. When identity verification on the diagnostic apparatus succeeds, the vehicle may execute the first diagnostic item, so that security of vehicle diagnosis can be ensured.

In a possible implementation, the third diagnostic instruction further includes a fifth ciphertext, where the fifth ciphertext is obtained by encrypting an identifier of a second diagnostic item by the diagnostic apparatus by using the first diagnostic key. That the vehicle executes the first diagnostic item specifically includes: The vehicle determines, based on the identifier of the first diagnostic key, an identifier of a diagnostic item supported by the first diagnostic key.

The vehicle executes the first diagnostic item when the identifier of the second diagnostic item is included in the identifier of the diagnostic item supported by the first diagnostic key. The vehicle does not execute the first diagnostic item when the identifier of the second diagnostic item is not included in the identifier of the diagnostic item supported by the first diagnostic key.

In this implementation, the vehicle may verify the identifier of the diagnostic item encrypted by using the first diagnostic key, to detect whether there is a malicious device using the first diagnostic key to encrypt a diagnostic item that is not supported by the first diagnostic key. When the identifier of the second diagnostic item is included in the identifier of the diagnostic item supported by the first diagnostic key, to be specific, there is no malicious device using the first diagnostic key to encrypt a diagnostic item that is not supported by the first diagnostic key, the vehicle may execute the first diagnostic item (or the second diagnostic item). This can further ensure safety of vehicle diagnosis.

In a possible implementation, a user may customize the to-be-diagnosed first diagnostic item of the vehicle, to improve user experience. The first diagnostic item is a target diagnostic item in at least one diagnostic item, different target diagnostic items have different first diagnostic keys, and the at least one diagnostic item is an item requested by the diagnostic apparatus to diagnose.

In this implementation, the vehicle may execute, together with the diagnostic apparatus, the target diagnostic item that is in the at least one diagnostic item and that is selected by the user through customization, so that a user requirement can be met. For example, the target diagnostic item in the at least one diagnostic item may be a preset diagnostic item.

In a possible implementation, the target diagnostic item is an authorized diagnostic item in the at least one diagnostic item. In this implementation, the vehicle may execute the authorized diagnostic item together with the diagnostic apparatus, to ensure security of vehicle diagnosis, and avoid a security problem caused by unauthorized diagnosis.

In a possible implementation, the vehicle may display a second interface, where the second interface includes identifiers of a plurality of to-be-selected diagnostic items, so that a user can select a diagnostic item on the second interface. In response to an operation of selecting an identifier of the at least one diagnostic item on the second interface by a user, the vehicle determines that the first diagnostic instruction is received.

According to a second aspect, an embodiment of this application provides a vehicle diagnostic method. The vehicle diagnostic method may be performed by a diagnostic apparatus. In the method, the diagnostic apparatus sends a first diagnostic application to a diagnostic authorization apparatus in response to a first diagnostic instruction, where the first diagnostic application includes a first public key. In response to the first diagnostic application, the diagnostic authorization apparatus may generate a first diagnostic key of a first diagnostic item, and encrypt the first diagnostic key by using the first public key, to obtain a first ciphertext. The diagnostic authorization apparatus may send the first ciphertext to the diagnostic apparatus. Correspondingly, the diagnostic apparatus may receive the first ciphertext from the diagnostic authorization apparatus, where the first ciphertext is obtained by encrypting a first diagnostic key of a first diagnostic item based on the first public key. The diagnostic apparatus may execute the first diagnostic item in collaboration with a vehicle based on the first diagnostic key.

The diagnostic authorization apparatus may send a second diagnostic application to the diagnostic authorization apparatus in response to a second diagnostic instruction, where the second diagnostic application includes a second public key, and the second public key is different from the first public key. The diagnostic authorization apparatus may generate a second diagnostic key of the first diagnostic item in response to the second diagnostic application, where the second diagnostic key is different from the first diagnostic key. The diagnostic authorization apparatus may encrypt the second diagnostic key by using the second public key to obtain a second ciphertext, and send the second ciphertext to the diagnostic apparatus. Correspondingly, the diagnostic apparatus may receive the second ciphertext from the diagnostic authorization apparatus, where the second ciphertext is obtained by encrypting the second diagnostic key of the first diagnostic item based on the second public key, and the second diagnostic key is different from the first diagnostic key. The diagnostic apparatus may execute the first diagnostic item in collaboration with the vehicle based on the second diagnostic key.

In a possible implementation, the first diagnostic application and the second diagnostic application may correspond to a same vehicle or different vehicles. For example, the first diagnostic application and the second diagnostic application may be triggered when a same vehicle is diagnosed at different times, or the first diagnostic application is triggered when the first vehicle is diagnosed, the second diagnostic application is triggered when the second vehicle is diagnosed, and the first vehicle and the second vehicle are different.

In this embodiment of this application, in a plurality of times of diagnosis on the first diagnostic item of a same vehicle, or in diagnosis on first diagnostic items of different vehicles, the diagnostic apparatus may apply to the diagnostic authorization apparatus for generating different diagnostic keys, to prevent the diagnostic apparatus from performing diagnosis by using a same diagnostic key each time, and replay of the diagnostic key can be avoided, thereby ensuring security of the diagnostic key and security of vehicle diagnosis. In addition, the diagnostic authorization apparatus may encrypt a diagnostic key by using a public key, so that security of the diagnostic key can be ensured. In addition, in the plurality of times of diagnosis on the first diagnostic item of the same vehicle or diagnosis on the first diagnostic items of different vehicles, the diagnostic apparatus may encrypt the diagnostic key of the first diagnostic item by using different public keys, and replay of the public key can also be avoided, thereby further improving security of the diagnostic key and security of vehicle diagnosis.

In a possible implementation, in response to the first diagnostic application, the diagnostic authorization apparatus may further encrypt the first diagnostic key by using a preset encryption key, to obtain a third ciphertext. The diagnostic authorization apparatus may directly send the third ciphertext to the vehicle, or the diagnostic authorization apparatus may send the third ciphertext to the vehicle by using the diagnostic apparatus. Correspondingly, the diagnostic apparatus may receive the third ciphertext from the diagnostic authorization apparatus, and send the third ciphertext to the vehicle.

Similarly, in response to the second diagnostic application, the diagnostic authorization apparatus may further encrypt the second diagnostic key by using the preset encryption key, to obtain a fourth ciphertext. The diagnostic authorization apparatus may directly send the fourth ciphertext to the vehicle, or the diagnostic authorization apparatus may send the fourth ciphertext to the vehicle by using the diagnostic apparatus. Correspondingly, the diagnostic apparatus may receive the fourth ciphertext from the diagnostic authorization apparatus, and send the fourth ciphertext to the vehicle.

In this implementation, the diagnostic authorization apparatus may generate a diagnostic key, and deliver the diagnostic key separately to the diagnostic apparatus and the vehicle, to ensure that the diagnostic apparatus and the vehicle have a same diagnostic key, thereby ensuring smooth vehicle diagnosis. In addition, the diagnostic authorization apparatus uses different encryption keys (for example, the first public key and the preset encryption key), so that a problem that the vehicle can decrypt the first ciphertext and the second ciphertext can be avoided, and a problem that the diagnostic apparatus can decrypt the third ciphertext and the fourth ciphertext can be avoided, thereby ensuring security of the diagnostic key.

In a possible implementation, the first diagnostic instruction indicates at least one diagnostic item, and the first diagnostic application further includes an identifier of the at least one diagnostic item. In this implementation, the user may customize the at least one diagnostic item, so that user experience can be improved.

The first diagnostic item is a target diagnostic item in the at least one diagnostic item, and different target diagnostic items have different first diagnostic keys.

In this implementation, different target diagnostic items have different first diagnostic keys, so that security of the diagnostic key of each target diagnostic item can be ensured, thereby ensuring security of vehicle diagnosis.

In a possible implementation, the target diagnostic item is an authorized diagnostic item.

In a possible implementation, the user may customize the at least one diagnostic item on the diagnostic apparatus. For example, the diagnostic apparatus may display a first interface, where the first interface includes identifiers of a plurality of to-be-selected diagnostic items. In response to an operation of selecting the identifier of the at least one diagnostic item on the first interface by a user, the diagnostic apparatus may determine that the first diagnostic instruction is received.

In a possible implementation, the diagnostic apparatus may generate a first public-private key pair in response to the first diagnostic instruction, where the first public-private key pair includes the first public key and a first private key.

That the diagnostic apparatus executes the first diagnostic item in collaboration with the vehicle based on the first diagnostic key specifically includes: The diagnostic apparatus decrypts the first ciphertext by using the first private key, to obtain the first diagnostic key. In addition, the diagnostic apparatus sends a third diagnostic instruction to the vehicle, where the third diagnostic instruction includes an identifier of the first diagnostic key, and the third diagnostic instruction indicates the vehicle to execute the first diagnostic item.

In a possible implementation, the third diagnostic instruction further includes a fifth ciphertext, and after obtaining the first diagnostic key, the diagnostic apparatus may further encrypt an identifier of a second diagnostic item by using the first diagnostic key, to obtain the fifth ciphertext, where the second diagnostic item is the same as or different from the first diagnostic item.

In a possible implementation, the first diagnostic application may correspond to a same vehicle. For example, the first diagnostic application includes an identifier of a first vehicle, and the second diagnostic application includes the identifier of the first vehicle.

Alternatively, the first diagnostic application may correspond to different vehicles. For example, the first diagnostic application includes an identifier of the first vehicle, and the second diagnostic application includes an identifier of a second vehicle.

In a possible implementation, one diagnostic application may correspond to a plurality of vehicles. For example, the first diagnostic application includes the identifier of the first vehicle and the identifier of the second vehicle. The first ciphertext specifically includes a ciphertext obtained by encrypting the first diagnostic key of the first diagnostic item of the first vehicle based on the first public key, and a ciphertext obtained by encrypting the first diagnostic key of the first diagnostic item of the second vehicle based on the first public key, where the first diagnostic key of the first diagnostic item of the first vehicle is different from the first diagnostic key of the first diagnostic item of the second vehicle.

The second ciphertext specifically includes a ciphertext obtained by encrypting the second diagnostic key of the first diagnostic item of the first vehicle based on the second public key, and a ciphertext obtained by encrypting the second diagnostic key of the first diagnostic item of the second vehicle based on the second public key, where the second diagnostic key of the first diagnostic item of the first vehicle is different from the second diagnostic key of the first diagnostic item of the second vehicle.

In a possible implementation, the identifier of the at least one diagnostic item and the identifier of the first vehicle are included in a signature file. Before sending the first diagnostic application to the diagnostic authorization apparatus, the diagnostic apparatus may further sign the identifier of the at least one diagnostic item and the identifier of the first vehicle by using a preset private key, to obtain the signature file.

In response to the first diagnostic application, the diagnostic authorization apparatus may perform signature verification on the signature file by using a preset public key, to determine whether the diagnostic apparatus has a permission to apply for a diagnostic key. When signature verification succeeds, the diagnostic authorization apparatus determines that the diagnostic apparatus has the permission to apply for the diagnostic key. When signature verification does not succeed, the diagnostic authorization apparatus determines that the diagnostic apparatus does not have the permission to apply for the diagnostic key, and the diagnostic authorization apparatus may not respond.

In this implementation, the diagnostic authorization apparatus may verify, in a signature and signature verification manner, whether the diagnostic apparatus has the permission to apply for the diagnostic key. When the diagnostic apparatus has the permission to apply for the diagnostic key, the diagnostic key is generated, so that security of the diagnostic key and vehicle diagnosis can be ensured.

According to a third aspect, an embodiment of this application provides a vehicle diagnostic method, and the method is performed by a diagnostic authorization apparatus. In the method, the diagnostic authorization apparatus may receive a first diagnostic application from a diagnostic apparatus, where the first diagnostic application includes a first public key; generate a first diagnostic key of a first diagnostic item; encrypt the first diagnostic key by using the first public key, to obtain a first ciphertext; and send the first ciphertext to the diagnostic apparatus.

The diagnostic authorization apparatus may receive a second diagnostic application from the diagnostic apparatus, where the first diagnostic application includes a second public key, and the second public key is different from the first public key; generate a second diagnostic key of the first diagnostic item, where the second diagnostic key is different from the first diagnostic key; encrypt the second diagnostic key by using the second public key, to obtain a second ciphertext; and send the second ciphertext to the diagnostic apparatus.

In a possible implementation, after generating the first diagnostic key of the first diagnostic item, the method further includes: encrypting the first diagnostic key by using a preset encryption key, to obtain a third ciphertext; and sending the third ciphertext to a vehicle.

After generating the second diagnostic key of the first diagnostic item, the method further includes: encrypting the second diagnostic key by using the preset encryption key, to obtain a fourth ciphertext; and sending the fourth ciphertext to the vehicle.

In a possible implementation, the first diagnostic application further includes an identifier of at least one diagnostic item, the first diagnostic item is a target diagnostic item in the at least one diagnostic item, and different target diagnostic items have different first diagnostic keys.

In a possible implementation, the target diagnostic item is an authorized diagnostic item in the at least one diagnostic item.

In a possible implementation, the first diagnostic application further includes an identifier of a first vehicle, and before generating the first diagnostic key of the first diagnostic item, the method further includes: determining the target diagnostic item in the at least one diagnostic item based on authorization information of the first vehicle and/or user authorization information, where the authorization information of the first vehicle indicates an authorized diagnostic item of the first vehicle, and the user authorization information indicates a diagnostic item that is of the first vehicle and that is authorized by a user.

In a possible implementation, the identifier of the at least one diagnostic item and the identifier of the first vehicle are included in a signature file, the signature file is obtained by signing based on a preset private key, and after receiving the first diagnostic application from the diagnostic apparatus, the method further includes: performing signature verification on the signature file by using a preset public key.

Correspondingly, generating the first diagnostic key of the first diagnostic item includes: generating the first diagnostic key of the first diagnostic item in response to success of signature verification.

In a possible implementation, the first diagnostic application further includes an identifier of a first vehicle, and the second diagnostic application includes the identifier of the first vehicle; or the first diagnostic application includes an identifier of the first vehicle, and the second diagnostic application includes an identifier of a second vehicle.

In a possible implementation, the first diagnostic application further includes an identifier of a first vehicle and an identifier of a second vehicle, the first diagnostic key of the first diagnostic item includes the first diagnostic key of the first diagnostic item of the first vehicle, and the first diagnostic key of the first diagnostic item of the second vehicle, and the first diagnostic key of the first diagnostic item of the first vehicle is different from the first diagnostic key of the first diagnostic item of the second vehicle.

According to a fourth aspect, an embodiment of this application provides a vehicle diagnostic system. The vehicle diagnostic system includes a vehicle configured to perform the method in the first aspect, a diagnostic apparatus configured to perform the method in the second aspect, and a diagnostic authorization apparatus configured to perform the method in the third aspect.

According to a fifth aspect, an embodiment of this application provides an electronic device. The electronic device may include a processor and a memory. The memory is configured to store computer-executable program code, where the program code includes instructions; and when the processor executes the instructions, the instructions enable the electronic device to perform the methods in the first aspect, the second aspect, and the third aspect.

According to a sixth aspect, an embodiment of this application provides an electronic device. The electronic device may be the vehicle in the first aspect, the diagnostic apparatus in the second aspect, or the diagnostic authorization apparatus in the third aspect. The electronic device may include units, modules, or circuits configured to perform the methods provided in the first aspect, the second aspect, and the third aspect.

According to a seventh aspect, an embodiment of this application provides a vehicle diagnostic apparatus. The vehicle diagnostic apparatus may include modules configured to perform the methods provided in the first aspect, the second aspect, and the third aspect.

According to an eighth aspect, an embodiment of this application provides a computer program product including instructions. When the computer program product is run on a computer, the computer is enabled to perform the methods in the first aspect, the second aspect, and the third aspect.

According to a ninth aspect, an embodiment of this application provides a computer-readable storage medium. The computer-readable storage medium stores instructions. When the instructions are run on a computer, the computer is enabled to perform the methods in the first aspect, the second aspect, and the third aspect.

For beneficial effect of the possible implementations of the second aspect to the ninth aspect, refer to the beneficial effects brought by the first aspect. Details are not described herein again.

This application provides a vehicle diagnostic method, system, and apparatus, and an electronic device. In the method, in a plurality of times of diagnosis on a first diagnostic item of a same vehicle, or in diagnosis on first diagnostic items of different vehicles, a diagnostic authorization apparatus may generate different diagnostic keys, to prevent the diagnostic apparatus from performing diagnosis by using a same diagnostic key each time, and replay of the diagnostic key can be avoided, thereby ensuring security of the diagnostic key and security of vehicle diagnosis. In addition, the diagnostic authorization apparatus may encrypt a diagnostic key by using a public key, so that security of the diagnostic key can be ensured. In addition, in the plurality of times of diagnosis on the first diagnostic item of the same vehicle or diagnosis on the first diagnostic items of different vehicles, the diagnostic apparatus may encrypt the diagnostic key of the first diagnostic item by using different public keys, and replay of the public key can also be avoided, thereby further improving security of the diagnostic key and security of vehicle diagnosis.

### BRIEF DESCRIPTION OF DRAWINGS

FIG. 1 is a diagram of an existing system architecture for vehicle diagnosis;
FIG. 2 is a diagram of a system architecture to which a vehicle diagnostic method according to an embodiment of this application is applicable;
FIG. 3A and FIG. 3B are a schematic flowchart of an embodiment of a vehicle diagnostic method according to an embodiment of this application;
FIG. 4A is a schematic flowchart of vehicle diagnosis according to an embodiment of this application;
FIG. 4B is another schematic flowchart of vehicle diagnosis according to an embodiment of this application;
FIG. 5A, FIG. 5B, and FIG. 5C are a schematic flowchart of another embodiment of a vehicle diagnostic method according to an embodiment of this application;
FIG. 6 is a diagram of an interface of a diagnostic apparatus according to an embodiment of this application;
FIG. 7A and FIG. 7B are a schematic flowchart of another embodiment of a vehicle diagnostic method according to an embodiment of this application;
FIG. 8A, FIG. 8B, and FIG. 8C are a schematic flowchart of another embodiment of a vehicle diagnostic method according to an embodiment of this application;
FIG. 9A and FIG. 9B are a schematic flowchart of another embodiment of a vehicle diagnostic method according to an embodiment of this application; and
FIG. 10 is a diagram of a structure of an electronic device according to an embodiment of this application.

### DESCRIPTION OF EMBODIMENTS

The objective of vehicle diagnosis is to determine a faulty part of the vehicle and a fault cause. For example, when a vehicle of a user is faulty, the user may drive the vehicle to an automobile sales service shop (automobile sales service shop, 4S), and a staff member diagnoses the vehicle by using a diagnostic apparatus. In some embodiments, the diagnostic apparatus may be a diagnostic instrument. Alternatively, the staff member may remotely diagnose the vehicle by using a diagnostic apparatus. In some embodiments, the diagnostic apparatus may be a host computer in a vehicle factory, and the host computer is a device such as a personal computer (personal computer, PC) or a tablet computer (portable Android device, PAD). A specific form of the diagnostic apparatus is not limited in this embodiment of this application.

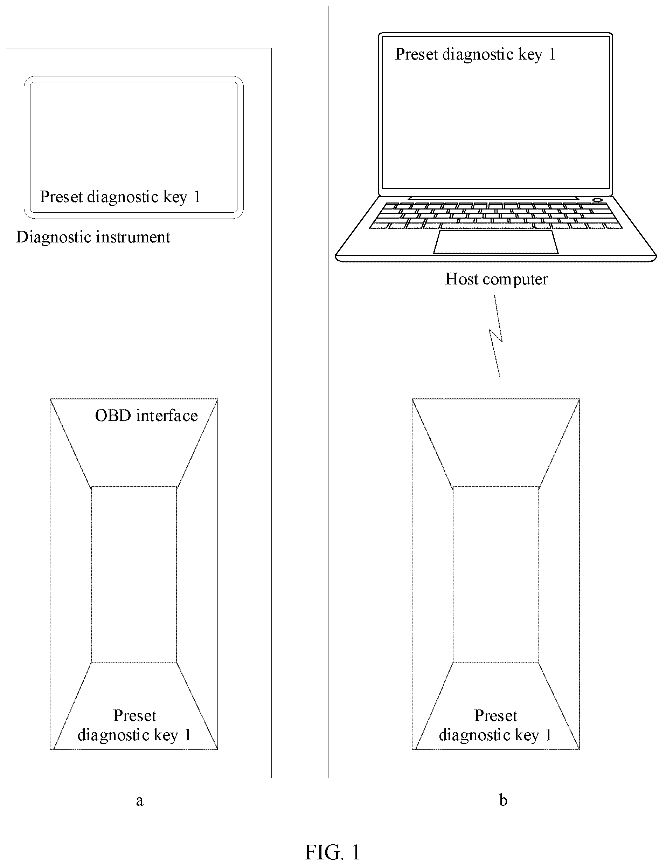

FIG. 1 is a diagram of an existing system architecture for vehicle diagnosis. With reference to a in FIG. 1, for example, a staff member may connect a diagnostic apparatus to an on-board diagnostics (on-board diagnostics, OBD) interface of a vehicle, and operate the diagnostic apparatus to diagnose the vehicle. With reference to b in FIG. 1, for example, the staff member may operate the diagnostic apparatus or the vehicle, so that the diagnostic apparatus can be wirelessly connected to the vehicle, and the staff member may operate the diagnostic apparatus to diagnose the vehicle. The diagnostic apparatus may diagnose power, a chassis, a body, and the like of the vehicle.

In some embodiments, the vehicle includes a plurality of electronic control units (electronic control unit, ECU), and the ECU may be referred to as a "driving computer" or an "on-board computer". For example, the vehicle may include but is not limited to: a tire pressure monitoring system (tire pressure monitoring system, TPMS) ECU, a body control (body control module, BCM) ECU, an antilock brake system (antilock brake system, ABS) ECU, an engine control module (engine control module, ECM) ECU, a video audio entertainment system (video audio entertainment system, VAES) ECU, an instrument pack (instrument pack, IPK) ECU, and the like. The ECU is used to control a driving status of the vehicle and implement various functions of the vehicle. For example, the ECU may control the vehicle through data acquisition and exchange of a sensor and a bus in the vehicle.

When diagnosing the vehicle, the diagnostic apparatus may interact with the ECU in the vehicle, to obtain data from the ECU, and further diagnose the vehicle based on the data from the ECU. For example, when diagnosing an engine of the vehicle, the diagnostic apparatus may obtain data of the engine from the ECM ECU, and further diagnose, based on the data of the engine, whether the engine is faulty and a fault cause.

A "diagnostic item" is introduced in embodiments of this application. The diagnostic item may be understood as a diagnosis operation performed by the diagnostic apparatus on the vehicle. Diagnostic items may include but are not limited to: firmware flashing, exhaust emission diagnosis, and noise diagnosis. Firmware may include but is not limited to firmware such as an ECU, a sensor, a screen, and the like in the vehicle. Firmware flashing may be understood as rewriting and updating the firmware.

This is because when the diagnostic apparatus diagnoses the vehicle, data of the vehicle needs to be obtained. To ensure data security, the vehicle needs to perform identity verification on the diagnostic apparatus. Currently, a same diagnostic key may be preset in the diagnostic apparatus and the vehicle. When diagnosing the vehicle, the diagnostic apparatus may send a diagnostic instruction to the vehicle. The diagnostic instruction may include the diagnostic key preset in the diagnostic apparatus. The vehicle may verify the diagnostic key in the diagnostic instruction, to verify an identity of the diagnostic apparatus. If the diagnostic key in the diagnostic instruction is the same as the diagnostic key preset in the vehicle, identity verification of the diagnostic apparatus succeeds, and the vehicle may execute a diagnostic item in collaboration with the diagnostic apparatus. If the diagnostic key in the diagnostic instruction is different from the diagnostic key preset in the vehicle, identity verification of the diagnostic apparatus does not succeed, and the vehicle does not execute a diagnostic item in collaboration with the diagnostic apparatus.

Currently, the manner of presetting a same diagnostic key in the diagnostic apparatus and the vehicle has low security. Once the diagnostic key is cracked, a malicious device may obtain data of the vehicle, causing a data security problem, and the malicious device may even randomly flash firmware and modify programs, causing a vehicle fault.

In some embodiments, each time the diagnostic apparatus diagnoses the vehicle, a different diagnostic key may be generated, and the diagnostic key is synchronized with the vehicle. In this embodiment, the diagnostic apparatus can be prevented from using a same diagnostic key each time the diagnostic apparatus diagnoses the vehicle. On the basis of ensuring that the vehicle can verify the identity of the diagnostic apparatus, replay of the diagnostic key can also be avoided, it is difficult for a malicious user to crack the diagnostic key, and data security can also be ensured. Although data security can be improved to some extent in this embodiment, because the current diagnostic apparatus has poor security, the manner of generating a diagnostic key by the diagnostic apparatus also causes a data security problem.

An embodiment of this application provides a vehicle diagnostic method. Each time a diagnostic apparatus diagnoses a vehicle, the diagnostic apparatus may apply to a diagnostic authorization apparatus for generating a diagnostic key. Compared with the diagnostic apparatus, the diagnostic authorization apparatus has a more complete and powerful security protection mechanism, so that security of the diagnostic key can be ensured. In addition, during each diagnosis, the diagnostic authorization apparatus may generate a different diagnostic key, to avoid replay of the diagnostic key, thereby ensuring data security and security of vehicle diagnosis. In some embodiments, the diagnostic authorization apparatus may be, for example, a cloud or another device with a relatively high security protection mechanism.

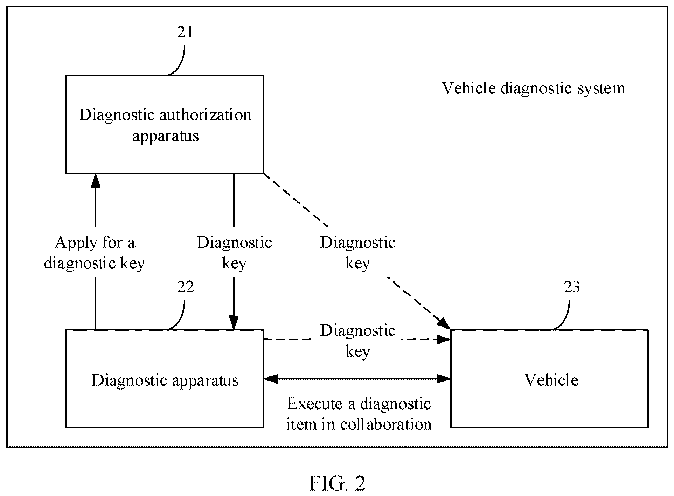

FIG. 2 is a diagram of a system architecture to which a vehicle diagnostic method according to an embodiment of this application is applicable. With reference to FIG. 2, the system architecture may include a diagnostic authorization apparatus 21, a diagnostic apparatus 22, and a vehicle 23. In some embodiments, the diagnostic apparatus 22 and the diagnostic authorization apparatus 22 may be integrated and deployed together. For example, both the diagnostic authorization apparatus 21 and the diagnostic apparatus 22 may be deployed on a cloud. In FIG. 2, an example in which the diagnostic authorization apparatus 21 and the diagnostic apparatus 22 are separately deployed is used.

In some embodiments, a user may trigger the diagnostic apparatus 22 or the vehicle 23 to apply to the diagnostic authorization apparatus 21 for a diagnostic key. For example, if the user operates the diagnostic apparatus 22, the diagnostic apparatus 22 may be triggered to apply to the diagnostic authorization apparatus 21 for the diagnostic key. For example, if the user operates the vehicle 23, the vehicle 23 may be triggered to apply to the diagnostic authorization apparatus 21 for the diagnostic key. The vehicle 23 may directly apply to the diagnostic authorization apparatus 21 for the diagnostic key, or the vehicle 23 may apply to the diagnostic authorization apparatus 21 for the diagnostic key by using the diagnostic apparatus 22.

The diagnostic authorization apparatus 21 is configured to: generate the diagnostic key, and synchronize the diagnostic key to the diagnostic apparatus 22 and the vehicle 23. In some embodiments, a dashed line in FIG. 2 represents the manner in which the diagnostic authorization apparatus 21 synchronizes the diagnostic key to the vehicle. For example, the diagnostic authorization apparatus 21 may directly send the diagnostic key to the vehicle 23, or the diagnostic authorization apparatus 21 may send the diagnostic key to the vehicle 23 by using the diagnostic apparatus 22. In this way, when the diagnostic apparatus 22 sends a diagnostic instruction to the vehicle 23, the vehicle 23 may verify an identity of the diagnostic apparatus 22 based on the diagnostic key.

In some embodiments, the diagnostic apparatus 22 may be connected to the vehicle 23 in a wired or wireless manner. For example, the diagnostic apparatus 22 may be connected to an OBD interface of the vehicle 23. In some embodiments, the diagnostic apparatus 22 may be connected to the diagnostic authorization apparatus 21 in a wired or wireless manner. For example, the diagnostic apparatus 22 may be connected to the diagnostic authorization apparatus 21 by using a network cable.

In some embodiments, the vehicle 23 may interact with the diagnostic authorization apparatus 21 by using the diagnostic apparatus 22. In some embodiments, the vehicle 23 may be further connected to the diagnostic authorization apparatus 21 in a wired or wireless manner, so that the vehicle 23 can directly interact with the diagnostic authorization apparatus 21.

In some embodiments, there may be a plurality of diagnostic apparatuses 22, and the plurality of diagnostic apparatuses may be configured to diagnose at least one vehicle. In some embodiments, there may be at least one vehicle 23, and one diagnostic apparatus 22 may be configured to diagnose the at least one vehicle. It should be understood that, in FIG. 2, one diagnostic apparatus 22 and one vehicle 23 are used as an example.

In some embodiments, the diagnostic authorization apparatus 21 may include a diagnostic authorization management service module. Operations performed by the diagnostic authorization apparatus 21 in the following embodiments may be considered as operations performed by the diagnostic authorization management service module. In some embodiments, the diagnostic apparatus 22 may include a diagnostic apparatus service module, and operations performed by the diagnostic apparatus 22 in the following embodiments may be considered as operations performed by the diagnostic apparatus service module.

In some embodiments, the vehicle 23 may include a vehicle diagnostic service module. Operations performed by the vehicle 23 in the following embodiments may be considered as operations performed by the vehicle diagnostic service module. In some embodiments, the vehicle diagnostic service module may be, for example, a cockpit domain controller (cockpit domain controller, CDC), a vehicle domain controller (vehicle domain controller, VDC), or the like.

It should be noted that, in the vehicle diagnostic method provided in this embodiment of this application, the user may drive the vehicle 23 to a 4S shop, and a staff member operates the diagnostic apparatus 22 or the vehicle 23 to implement vehicle diagnosis. Alternatively, the user may operate the vehicle 23, and trigger the diagnostic apparatus 22 to implement vehicle diagnosis. For example, the user may log in to a diagnostic account on the vehicle 23, to interact with the diagnostic apparatus 22 and the diagnostic authorization apparatus 21, so as to implement vehicle diagnosis performed by the diagnostic apparatus 22.

The following describes, with reference to specific embodiments, the vehicle diagnostic method provided in embodiments of this application. The following several embodiments may be combined with each other, and a same or similar concept or process may not be described repeatedly in some embodiments.

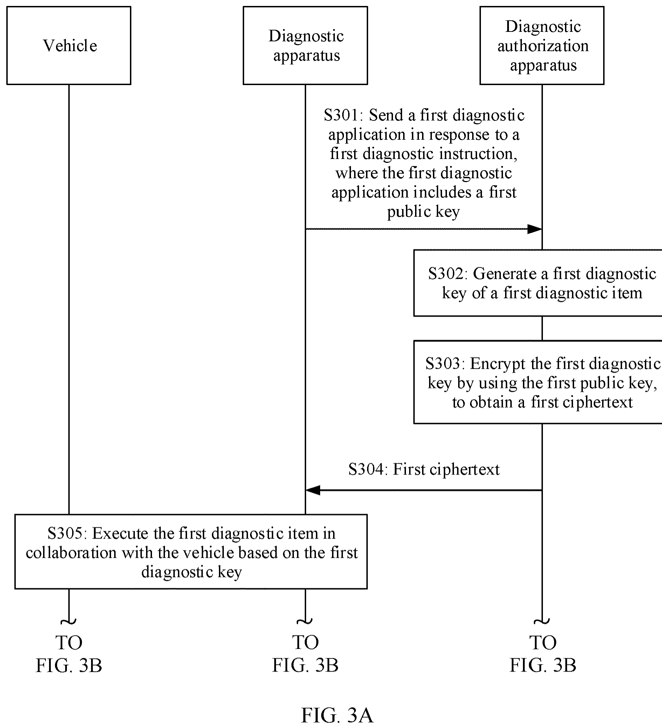

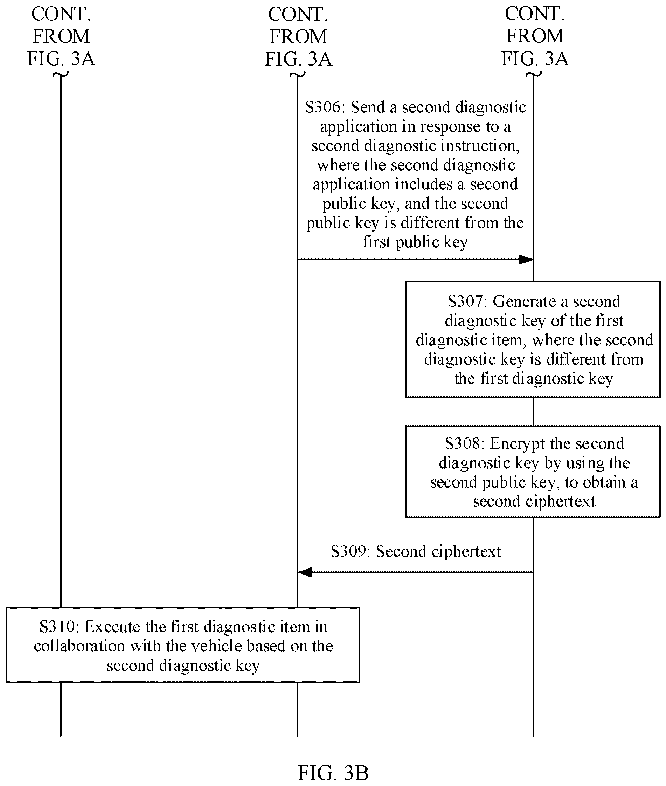

FIG. 3A and FIG. 3B are a schematic flowchart of an embodiment of a vehicle diagnostic method according to an embodiment of this application. With reference to FIG. 3A and FIG. 3B, the vehicle diagnostic method provided in this embodiment of this application may include the following steps.

S301: A diagnostic apparatus sends a first diagnostic application to a diagnostic authorization apparatus in response to a first diagnostic instruction, where the first diagnostic application includes a first public key.

The first diagnostic instruction indicates the diagnostic apparatus to apply to the diagnostic authorization apparatus for a diagnostic key, and to diagnose a vehicle by using the diagnostic key.

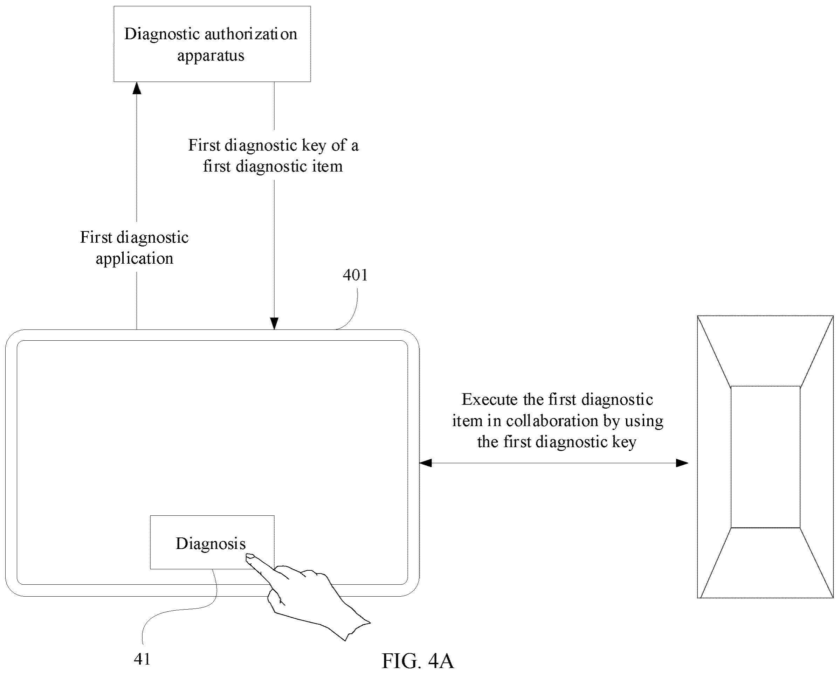

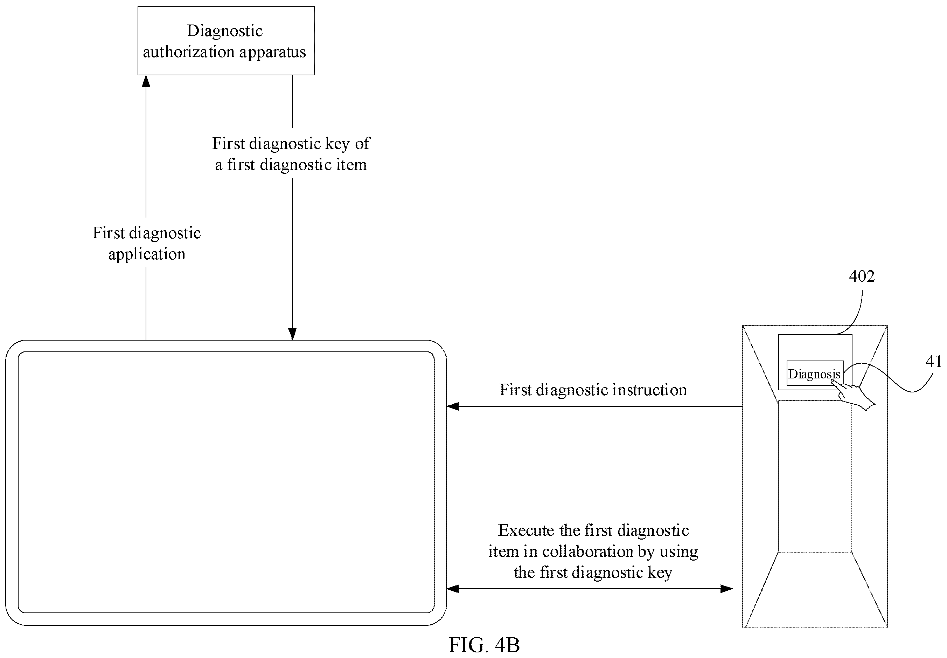

In some embodiments, the first diagnostic instruction may be triggered by operating the diagnostic apparatus by a user. For details, refer to related descriptions in FIG. 4A. In some embodiments, the first diagnostic instruction may be triggered by operating the vehicle by the user. The vehicle may send the first diagnostic instruction to the diagnostic apparatus in response to the operation of the user. For details, refer to related descriptions in FIG. 4B. In some embodiments, the first diagnostic instruction may be automatically and periodically triggered by the diagnostic apparatus. For example, a diagnostic apparatus of a company may periodically diagnose a vehicle parked in the company, to ensure vehicle safety. In some embodiments, when the vehicle or the diagnostic apparatus is bound to a terminal device, the user may further operate the terminal device to trigger the first diagnostic instruction. The terminal device may include but is not limited to a mobile phone, a watch, a PC, a tablet computer, and the like.

The diagnostic apparatus may send the first diagnostic application to the diagnostic authorization apparatus in response to the first diagnostic instruction. The first diagnostic application is used to request the diagnostic key. The first diagnostic application may include the first public key, and the first public key is used to encrypt the diagnostic key, to prevent the diagnostic key from being directly intercepted by a malicious device during transmission, thereby ensuring security of the diagnostic key.

In some embodiments, the diagnostic apparatus may pre-store a plurality of public-private key pairs, and the plurality of public-private key pairs have a preset use sequence. In response to the first diagnostic instruction, the diagnostic apparatus may determine a to-be-used first public-private key pair from the plurality of public-private key pairs based on the use sequence of the public-private key pairs. The first public-private key pair includes the first public key and a first private key, where the first public key is used to encrypt the diagnostic key, and the first private key is used to decrypt the diagnostic key.

In some embodiments, the diagnostic apparatus may generate the first public-private key pair in response to the first diagnostic instruction, where the first public-private key pair includes the first public key and the first private key. Compared with the manner in which the plurality of public-private key pairs are pre-stored, the manner in which the diagnostic apparatus randomly generates the first public-private key pair has higher security.

S302: The diagnostic authorization apparatus generates a first diagnostic key of a first diagnostic item.

In some embodiments, the first diagnostic item may include all diagnostic items of the vehicle. For example, each time the diagnosis apparatus diagnoses the vehicle, the diagnostic apparatus may execute all the diagnostic items of the vehicle. For example, all the diagnostic items of the vehicle include firmware flashing, exhaust emission diagnosis, and noise diagnosis, and the first diagnostic item may include firmware flashing, exhaust emission diagnosis, and noise diagnosis.

In some embodiments, the first diagnostic item may be some diagnostic items of the vehicle, and the some diagnostic items may be preset or customized by the user. For example, for a vehicle A, a fault rate of exhaust emission and vehicle noise is high. Therefore, exhaust emission diagnosis and noise diagnosis may be used as the first diagnostic item. Each time the diagnostic apparatus diagnoses the vehicle A, exhaust emission diagnosis and noise diagnosis may be performed. In some embodiments, predefined diagnostic items of different vehicles may be different, and predefined diagnostic items of a same vehicle may be changed. This is not limited in this embodiment of this application.

In some embodiments, the diagnostic authorization apparatus may generate the first diagnostic key of the first diagnostic item in response to the first diagnostic application. In some embodiments, when the first diagnostic item includes a plurality of diagnostic items, the diagnostic authorization apparatus may generate the first diagnostic key of each diagnostic item, and the first diagnostic keys of different diagnostic items may be the same or different.

In some embodiments, the diagnostic authorization apparatus may pre-store a plurality of diagnostic keys, and the plurality of diagnostic keys have a preset use sequence. In response to the first diagnostic application, the diagnostic authorization apparatus may determine the first diagnostic key of the first diagnostic item from the plurality of diagnostic keys based on the preset use sequence. In some embodiments, when the first diagnostic item includes the plurality of diagnostic items, each first diagnostic key pre-stored in the diagnostic authorization apparatus may include a plurality of diagnostic sub-keys, one first diagnostic key corresponds to one first diagnostic item, and each diagnostic sub-key in one first diagnostic key corresponds to one diagnostic item.

S303: The diagnostic authorization apparatus encrypts the first diagnostic key by using the first public key, to obtain a first ciphertext.

An encryption algorithm used by the diagnostic authorization apparatus is not limited in this embodiment of this application. For example, the encryption algorithm may include but is not limited to: an RSA encryption algorithm, an elliptic curve cryptography (elliptic curve cryptography, ECC) algorithm, and an identity-based cryptograph (identity-based cryptograph) algorithm.

S304: The diagnostic authorization apparatus sends the first ciphertext to the diagnostic apparatus.

Correspondingly, the diagnostic apparatus receives the first ciphertext from the diagnostic authorization apparatus, where the first ciphertext is obtained by encrypting the first diagnostic key of the first diagnostic item based on the first public key.

In this embodiment of this application, to ensure security of the first diagnostic key, the diagnostic authorization apparatus may encrypt the first diagnostic key by using the first public key, to obtain the first ciphertext. In this way, the first diagnostic key is transmitted in a ciphertext form, so that a problem that another malicious device randomly reads the first diagnostic key can be avoided. In addition, the diagnostic authorization apparatus encrypts the first diagnostic key by using the first public key, where the first public key corresponds to the first private key. Only the diagnostic apparatus that holds the first private key can decrypt the first ciphertext to obtain the first diagnostic key. Even if another device obtains the first ciphertext, the device cannot obtain the first diagnostic key through decryption. Therefore, security of the first diagnostic key can be further ensured.

S305: The diagnostic apparatus executes the first diagnostic item in collaboration with the vehicle based on the first diagnostic key.

After receiving the first ciphertext, the diagnostic apparatus may decrypt the first ciphertext by using the first private key, to obtain the first diagnostic key. The diagnostic apparatus may execute the first diagnostic item in collaboration with the vehicle based on the first diagnostic key.

In some embodiments, the diagnostic apparatus may send a third diagnostic instruction to the vehicle, where the third diagnostic instruction may include the first diagnostic key, and the first diagnostic key is used to verify an identity of the diagnostic apparatus.

In some embodiments, in response to the third diagnostic instruction, the vehicle may generate the first diagnostic key of the first diagnostic item by using an algorithm the same as that of the diagnostic authorization apparatus. Because the algorithm is the same as that of the diagnostic authorization apparatus, the first diagnostic key generated by the vehicle may be the same as the first diagnostic key generated by the diagnostic authorization apparatus, and is also the same as the first diagnostic key in the third diagnostic instruction.

In this embodiment, the vehicle may verify the first diagnostic key in the third diagnostic instruction by using the first diagnostic key generated by the vehicle. When the first diagnostic key generated by the vehicle is the same as the first diagnostic key in the third diagnostic instruction, verification succeeds, and the vehicle may execute the first diagnostic item in collaboration with the diagnostic apparatus. When the first diagnostic key generated by the vehicle is different from the first diagnostic key in the third diagnostic instruction, verification does not succeed, and the vehicle may not execute the first diagnostic item in collaboration with the diagnostic apparatus.

In some embodiments, a plurality of diagnostic keys may be pre-stored in the vehicle. The plurality of diagnostic keys have a preset use sequence. The plurality of diagnostic keys pre-stored in the vehicle and the preset use sequence are the same as the plurality of diagnostic keys pre-stored in the diagnostic authorization apparatus and the preset use sequence. In this way, it can be ensured that the diagnostic authorization apparatus and the vehicle use the same diagnostic key each time the vehicle is diagnosed.

In this embodiment, in response to the third diagnostic instruction, the vehicle may determine the first diagnostic key of the first diagnostic item from the plurality of diagnostic keys based on the use sequence of the diagnostic keys, and further verify the first diagnostic key in the third diagnostic instruction by using the first diagnostic key. When the first diagnostic key determined by the vehicle is the same as the first diagnostic key in the third diagnostic instruction, verification succeeds, and the vehicle may execute the first diagnostic item in collaboration with the diagnostic apparatus. When the first diagnostic key determined by the vehicle is different from the first diagnostic key in the third diagnostic instruction, verification does not succeed, and the vehicle may not execute the first diagnostic item in collaboration with the diagnostic apparatus.

In some embodiments, when identity verification of the diagnostic apparatus does not succeed, the vehicle may display verification failure information, or the vehicle may send a verification failure message to the diagnostic apparatus, so that the diagnostic apparatus displays the verification failure information and notifies the user in a timely manner.

Herein, a process in which the diagnostic apparatus executes the first diagnostic item in collaboration with the vehicle is briefly described. For a specific process, refer to the existing vehicle diagnostic process.

In some embodiments, the third diagnostic instruction may further include an identifier of the first diagnostic item. The identifier of the first diagnostic item may include but is not limited to information indicating the first diagnostic item, such as a name and a number of the first diagnostic item.

When identity verification of the diagnostic apparatus succeeds, the vehicle may obtain data from a corresponding ECU based on the identifier of the first diagnostic item, and send the obtained data to the diagnostic apparatus. The diagnostic apparatus may diagnose the vehicle based on the data from each ECU. For example, the vehicle flashes firmware of the corresponding ECU based on the identifier of the first diagnostic item. It should be understood that operations performed by the vehicle may be different for different diagnostic items.

For example, the identifier of the first diagnostic item includes: flashing of firmware of the ECM ECU and exhaust emission diagnosis. The vehicle may flash the firmware of the ECM ECU based on the identifier of the first diagnostic item, and when flashing is completed, send a flashing complete message to the diagnostic apparatus. The vehicle may also obtain exhaust emission data from an exhaust emission ECU, and send the exhaust emission data to the diagnostic apparatus. In response to the flashing complete message from the vehicle, the diagnostic apparatus may determine that a diagnostic item of flashing the firmware of the ECM ECU is completed, and the diagnostic apparatus may diagnose whether exhaust emission of the vehicle is faulty based on the exhaust emission data from the vehicle.

S306: The diagnostic apparatus sends a second diagnostic application to the diagnostic authorization apparatus in response to a second diagnostic instruction, where the second diagnostic application includes a second public key, and the second public key is different from the first public key.

S307: The diagnostic authorization apparatus generates a second diagnostic key of the first diagnostic item, where the second diagnostic key is different from the first diagnostic key.

S308: The diagnostic authorization apparatus encrypts the second diagnostic key by using the second public key, to obtain a second ciphertext.

S309: The diagnostic authorization apparatus sends the second ciphertext to the diagnostic apparatus.

Correspondingly, the diagnostic apparatus may receive the second ciphertext from the diagnostic authorization apparatus, where the second ciphertext is obtained by encrypting the second diagnostic key of the first diagnostic item based on the second public key.

S310: The diagnostic apparatus executes the first diagnostic item in collaboration with the vehicle based on the second diagnostic key.

For S306 to S310, refer to descriptions in S301 to S305.

It should be noted that, when the diagnostic apparatus applies to the diagnostic authorization apparatus for a diagnostic key of the first diagnostic item again in response to the second diagnostic instruction, the diagnostic authorization apparatus may generate the second diagnostic key of the first diagnostic item, where the second diagnostic key is different from the first diagnostic key. The second diagnostic key is different from the first diagnostic key, so that replay of the diagnostic key of the first diagnostic item can be avoided, and it is difficult for a malicious device to crack the diagnostic key of the first diagnostic item. Therefore, security is high, and security of vehicle diagnosis is ensured. In addition, the diagnostic authorization apparatus encrypts the second diagnostic key by using the second public key, where the second public key is different from the first public key, so that replay of the public key used to encrypt the diagnostic key of the first diagnostic item can also be avoided, thereby further ensuring security of the diagnostic key.

In some embodiments, the first diagnostic instruction and the second diagnostic instruction may correspond to a same vehicle or different vehicles. In this embodiment, using the first diagnostic application as an example, the first diagnostic application may further include an identifier of the vehicle, and the identifier of the vehicle may be, for example, a vehicle identification number (vehicle identification number, VIN). In some embodiments, the diagnostic apparatus may read the vehicle identification number, or the user manually enters the vehicle identification number on the diagnostic apparatus.

Correspondingly, when sending the first ciphertext to the diagnostic apparatus, the diagnostic authorization apparatus may further carry the identifier of the vehicle, so that the diagnostic apparatus diagnoses the corresponding vehicle by using the first diagnostic key based on the identifier of the vehicle. Similarly, the second diagnostic application may also include the identifier of the vehicle.

In some embodiments, the first diagnostic instruction and the second diagnostic instruction may correspond to a same vehicle, for example, a first vehicle. The first diagnostic instruction may be considered as triggering one diagnosis on the first diagnostic item of the first vehicle, and the second diagnostic instruction may be considered as triggering another diagnosis on the first diagnostic item of the first vehicle. Correspondingly, the first diagnostic application may include the identifier of the first vehicle, and the second diagnostic application may also include the identifier of the first vehicle.

In some embodiments, the first diagnostic instruction and the second diagnostic instruction may correspond to different vehicles. For example, the first diagnostic instruction may correspond to the first vehicle, and the second diagnostic vehicle may correspond to a second vehicle. In this embodiment, the diagnostic apparatus may be separately connected to the first vehicle and the second vehicle, and may diagnose the first vehicle and the second vehicle. The first diagnostic instruction may be considered as triggering one diagnosis on the first diagnostic item of the first vehicle, and the second diagnostic instruction may be considered as triggering one diagnosis on the first diagnostic item of the second vehicle. Correspondingly, the first diagnostic application may include the identifier of the first vehicle, and the second diagnostic application may include an identifier of the second vehicle.

In some embodiments, each diagnostic instruction may correspond to at least one vehicle. For example, the first diagnostic instruction may correspond to at least one vehicle, and the second diagnostic instruction may correspond to at least one vehicle. For example, using an example in which the first diagnostic instruction corresponds to the first vehicle and the second vehicle. For example, the diagnostic apparatus of the company diagnoses the first vehicle and the second vehicle parked in the company. The diagnostic apparatus may send a diagnostic application, for example, the first diagnostic application, to the diagnostic authorization apparatus. The first diagnostic application includes the identifier of the first vehicle and the identifier of the second vehicle. In this way, signaling consumption can be avoided. Correspondingly, the diagnostic authorization apparatus may generate the first diagnostic key of the first diagnostic item of the first vehicle and the first diagnostic key of the first diagnostic item of the second vehicle.

The first diagnostic key of the first diagnostic item of the first vehicle may be the same as or different from the first diagnostic key of the first diagnostic item of the second vehicle. When the first diagnostic key of the first diagnostic item of the first vehicle may be different from the first diagnostic key of the first diagnostic item of the second vehicle, a problem that a malicious device can diagnose all vehicles by cracking a diagnostic key of one vehicle can be avoided, thereby improving security of vehicle diagnosis.

In this embodiment of this application, in a plurality of times of diagnosis on the first diagnostic item of a same vehicle, or in diagnosis on first diagnostic items of different vehicles, the diagnostic authorization apparatus may generate different diagnostic keys, to prevent the diagnostic apparatus from performing diagnosis by using a same diagnostic key each time, and replay of the diagnostic key can be avoided, thereby ensuring security of the diagnostic key and security of vehicle diagnosis. In addition, the diagnostic authorization apparatus may encrypt a diagnostic key by using a public key, so that security of the diagnostic key can be ensured. In addition, in the plurality of times of diagnosis on the first diagnostic item of the same vehicle or diagnosis on the first diagnostic items of different vehicles, the diagnostic apparatus may encrypt the diagnostic key of the first diagnostic item by using different public keys, and replay of the public key can also be avoided, thereby further improving security of the diagnostic key and security of vehicle diagnosis.

With reference to the related description in S301, the user may operate the diagnostic apparatus to trigger the first diagnostic instruction. In some embodiments, for example, the user may trigger the first diagnostic instruction in a manner of voice, a gesture, operating an interface of the diagnostic apparatus, or the like. Using an example in which the user operates the interface of the diagnostic apparatus, for example, with reference to FIG. 4A, the diagnostic apparatus may display a first interface 401, where the first interface may include a diagnostic control 41. When the user operates the diagnostic control 41, the diagnostic apparatus may be triggered to receive the first diagnostic instruction. In this way, the diagnostic apparatus may perform S301 to S305 in response to the first diagnostic instruction.

In some embodiments, when the first diagnostic instruction and the second diagnostic instruction correspond to the first vehicle, when the diagnostic apparatus completes one diagnosis on the first diagnostic item of the first vehicle, the user may perform a same operation on the diagnostic apparatus, to trigger the diagnostic apparatus to receive the second diagnostic instruction, to perform another diagnosis on the first diagnostic item of the first vehicle.

In some embodiments, when the first diagnostic instruction corresponds to the first vehicle, and the second diagnostic instruction corresponds to the second vehicle, for example, the user operates the diagnostic control 41, the diagnostic apparatus may be triggered to receive the first diagnostic instruction and the second diagnostic instruction. In some embodiments, the diagnostic control 41 corresponding to the first vehicle and the diagnostic control 41 corresponding to the second vehicle may be displayed on the first interface 401. When the user operates the diagnostic control 41 corresponding to the first vehicle, the diagnostic apparatus may be triggered to receive the first diagnostic instruction. When the user operates the diagnostic control 41 corresponding to the second vehicle, the diagnostic apparatus may be triggered to receive the second diagnostic instruction. This is not limited in this embodiment of this application.

With reference to the related description in S301, the user may operate the vehicle to trigger the first diagnostic instruction. For a manner of operating the vehicle by the user, refer to related descriptions of an operation of operating the diagnostic apparatus by the user. In this embodiment, with reference to FIG. 4B, the vehicle may display a second interface 402, where the second interface may include the diagnostic control 41. When the user operates the diagnostic control 41, the diagnostic apparatus may be triggered to receive the first diagnostic instruction. In this way, the diagnostic apparatus may perform S301 to S305 in response to the first diagnostic instruction. It should be understood that, in FIG. 4B, an example in which the second interface 402 is displayed on an in-vehicle infotainment screen of the vehicle is used.

In some embodiments, when the first diagnostic instruction and the second diagnostic instruction correspond to the first vehicle, when the diagnostic apparatus completes one diagnosis on the first diagnostic item of the first vehicle, the user may perform a same operation on the vehicle, to trigger the vehicle to send the second diagnostic instruction to the diagnostic apparatus, to trigger the diagnostic apparatus to perform another diagnosis on the first diagnostic item of the first vehicle.

In some embodiments, when the first diagnostic instruction corresponds to the first vehicle, and the second diagnostic instruction corresponds to the second vehicle, the user may perform an operation on the first vehicle, to trigger the first vehicle to send the first diagnostic instruction to the diagnostic apparatus, and the user may perform an operation on the second vehicle, to trigger the second vehicle to send the second diagnostic instruction to the diagnostic apparatus.

In some embodiments, in a scenario in which the user operates the vehicle to trigger the first diagnostic instruction, as shown in FIG. 4B, after the diagnostic apparatus diagnoses the vehicle, the diagnostic apparatus may send a diagnostic result to the vehicle. For example, the diagnostic result may include diagnosing whether exhaust emission of the vehicle is faulty and a fault cause, and the vehicle may display the diagnostic result. In this scenario, the user can diagnose the vehicle by himself/herself, and the user can obtain a faulty part of the vehicle and the fault cause by himself/herself, thereby improving user experience.

In this embodiment of this application, the user may trigger vehicle diagnosis on the diagnostic apparatus or the vehicle, so that the user can diagnose the vehicle by himself/herself without relying on a staff member to perform vehicle diagnosis, and user experience is high.

In the related technology, a same diagnostic key may be preset in the diagnostic apparatus and the vehicle. If the diagnostic apparatus is replaced or upgraded, the diagnostic key in the diagnostic apparatus is updated. As a result, the diagnostic key preset in the diagnostic apparatus is different from that preset in the vehicle. Consequently, during vehicle diagnosis, identity verification of the diagnostic apparatus does not succeed, also causing a diagnostic failure. To resolve this problem, in some embodiments, the diagnostic authorization apparatus may generate a diagnostic key, and deliver the diagnostic key separately to the diagnostic apparatus and the vehicle, to ensure that the diagnostic apparatus and the vehicle have a same diagnostic key, thereby ensuring smooth vehicle diagnosis.

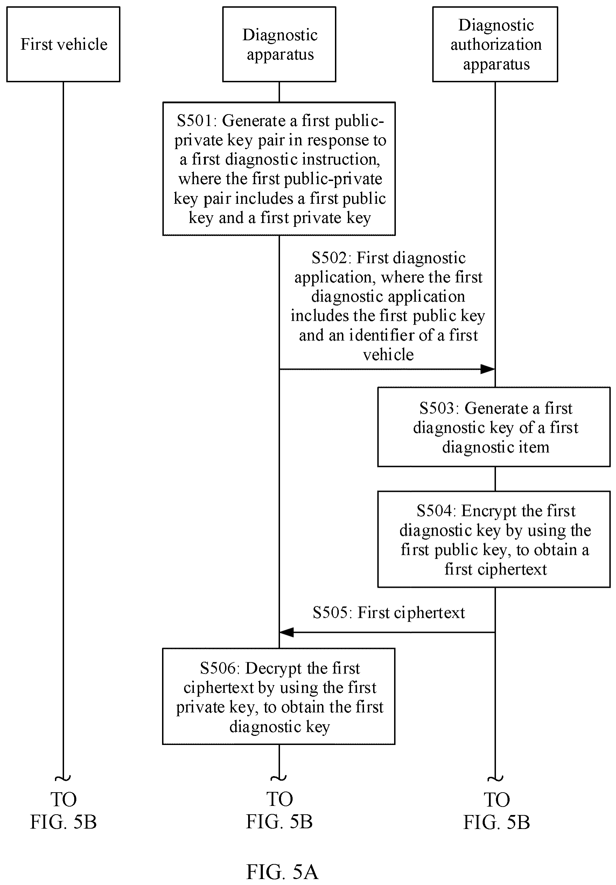

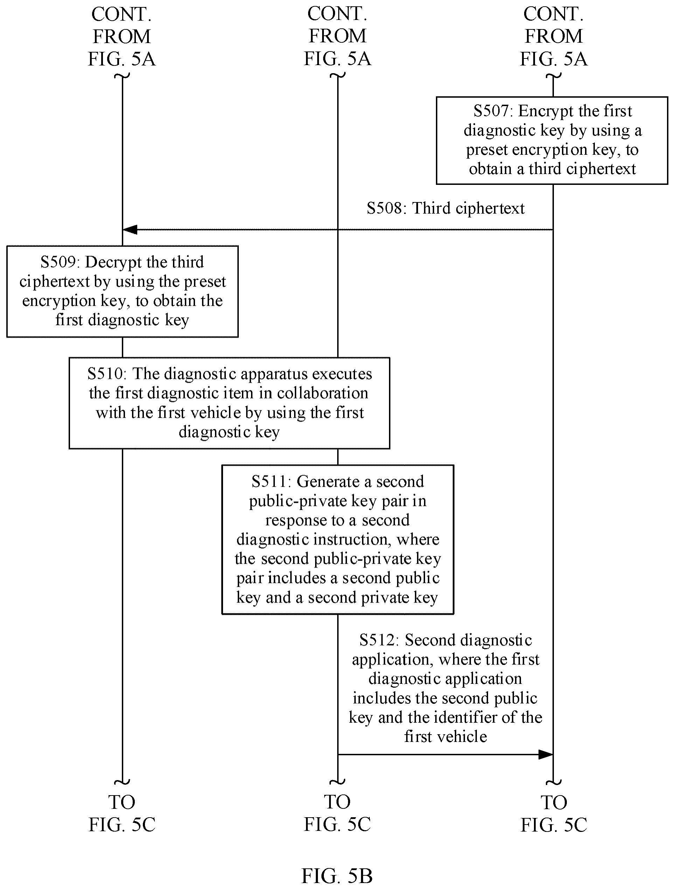

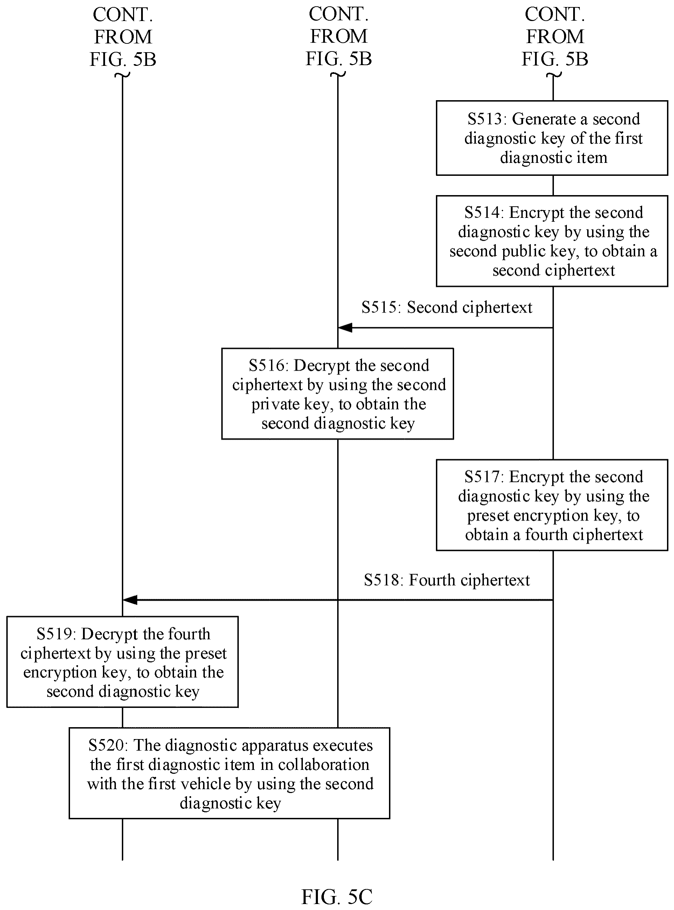

FIG. 5A, FIG. 5B, and FIG. 5C are a schematic flowchart of another embodiment of a vehicle diagnostic method according to an embodiment of this application. With reference to FIG. 5A, FIG. 5B, and FIG. 5C, the vehicle diagnostic method provided in this embodiment of this application may include the following steps.

S501: A diagnostic apparatus generates a first public-private key pair in response to a first diagnostic instruction, where the first public-private key pair includes a first public key and a first private key.

S502: The diagnostic apparatus sends a first diagnostic application to a diagnostic authorization apparatus, where the first diagnostic application includes the first public key and an identifier of a first vehicle.

For S501 and S502, refer to the description in S301.

S503: The diagnostic authorization apparatus generates a first diagnostic key of a first diagnostic item.

For S503, refer to the description in S302.

S504: The diagnostic authorization apparatus encrypts the first diagnostic key by using the first public key, to obtain a first ciphertext.

S505: The diagnostic authorization apparatus sends the first ciphertext to the diagnostic apparatus.

S506: The diagnostic apparatus decrypts the first ciphertext by using the first private key, to obtain the first diagnostic key.

For S504 to S506, refer to related descriptions in S303 to S305.

S507: The diagnostic authorization apparatus encrypts the first diagnostic key by using a preset encryption key, to obtain a third ciphertext.

In some embodiments, the diagnostic authorization apparatus and the vehicle may store a same preset encryption key, where the preset encryption key is used to encrypt a diagnostic key and decrypt the diagnostic key. In this embodiment of this application, the diagnostic authorization apparatus may encrypt the first diagnostic key by using the preset encryption key, to obtain the third ciphertext.

In this embodiment of this application, the diagnostic authorization apparatus does not directly send the first diagnostic key to the vehicle, but encrypts the first diagnostic key by using the preset encryption key, to ensure security of the first diagnostic key. In addition, the diagnostic authorization apparatus does not encrypt the first diagnostic key by using the first public key, to ensure that the third ciphertext can be decrypted only by the vehicle, so that the diagnostic apparatus or another device can be prevented from obtaining the first diagnostic key through decryption, and security of the first diagnostic key can be further improved.

S508: The diagnostic authorization apparatus sends the third ciphertext to the first vehicle.

In some embodiments, when the diagnostic authorization apparatus is connected to the vehicle, the diagnostic authorization apparatus may directly send the third ciphertext to the first vehicle based on the identifier of the first vehicle in the first diagnostic application.

In some embodiments, when the diagnostic authorization apparatus is not connected to the vehicle, the diagnostic authorization apparatus may send the third ciphertext to the diagnostic apparatus, so that the diagnostic apparatus sends the third ciphertext to the first vehicle. In this embodiment, the diagnostic authorization apparatus may carry an identifier of the diagnostic apparatus when sending the first ciphertext, and carry the identifier of the first vehicle when sending the third ciphertext, so that the diagnostic apparatus can distinguish between the first ciphertext sent to the diagnostic apparatus and the third ciphertext sent to the vehicle, thereby ensuring that the diagnostic apparatus can accurately send the third ciphertext to the first vehicle.

In some embodiments, the first ciphertext and the third ciphertext may be included in a same file. For example, the first ciphertext and the third ciphertext may be included in a first file.

In some embodiments, the diagnostic authorization apparatus may send the first file to the diagnostic apparatus, and send the first file to the first vehicle. The diagnostic apparatus may decrypt the first ciphertext in the first file, to obtain the first diagnostic key, and the first vehicle may decrypt the third ciphertext in the first file, to obtain the first diagnostic key. In some embodiments, the diagnostic authorization apparatus may send the first file to the diagnostic apparatus. After storing the first file, the diagnostic apparatus may send the first file to the first vehicle. In this way, the diagnostic apparatus can decrypt the first ciphertext in the first file, and the first vehicle can decrypt the third ciphertext in the first file. In some embodiments, the diagnostic authorization apparatus may send the first file to the diagnostic apparatus, the diagnostic apparatus may decrypt the first ciphertext in the first file, but cannot decrypt the third ciphertext, and the diagnostic apparatus may send the third ciphertext to the first vehicle, so that the first vehicle decrypts the third ciphertext.

In some embodiments, the first ciphertext and the third ciphertext may be included in different files. For example, the first ciphertext may be included in the first file, the third ciphertext may be included in a second file, and the first file is different from the second file. Similarly, the diagnostic authorization apparatus may send the first file to the diagnostic apparatus, and send the second file to the first vehicle. Alternatively, the diagnostic authorization apparatus may send the first file to the diagnostic apparatus, and send the second file to the first vehicle by using the diagnostic apparatus.

S509: The first vehicle decrypts the third ciphertext by using the preset encryption key, to obtain the first diagnostic key.

It should be understood that there is no sequence difference between S504 to S506 and S507 to S509, and the two may be performed simultaneously.

S510: The diagnostic apparatus executes the first diagnostic item in collaboration with the first vehicle by using the first diagnostic key.

For S510, refer to the related description in S305.

For example, in FIG. 5A, FIG. 5B, and FIG. 5C, an example in which the diagnostic apparatus diagnoses the first vehicle twice is used to describe a process in which the diagnostic apparatus diagnoses the first vehicle again.

S511: The diagnostic apparatus generates a second public-private key pair in response to a second diagnostic instruction, where the second public-private key pair includes a second public key and a second private key.

S512: The diagnostic apparatus sends a second diagnostic application to the diagnostic authorization apparatus, where the first diagnostic application includes the second public key and the identifier of the first vehicle.

S513: The diagnostic authorization apparatus generates a second diagnostic key of the first diagnostic item.

S514: The diagnostic authorization apparatus encrypts the second diagnostic key by using the second public key, to obtain a second ciphertext.

S515: The diagnostic authorization apparatus sends the second ciphertext to the diagnostic apparatus.

S516: The diagnostic apparatus decrypts the second ciphertext by using the second private key, to obtain the second diagnostic key.

S517: The diagnostic authorization apparatus encrypts the second diagnostic key by using the preset encryption key, to obtain a fourth ciphertext.

S518: The diagnostic authorization apparatus sends the fourth ciphertext to the first vehicle.

S509: The first vehicle decrypts the fourth ciphertext by using the preset encryption key, to obtain the second diagnostic key.

It should be understood that there is no sequence difference between S514 to S516 and S517 to S519, and the two may be performed simultaneously.

S520: The diagnostic apparatus executes the first diagnostic item in collaboration with the first vehicle by using the second diagnostic key.

For S511 to S520, refer to descriptions in S501 to S510.

In this embodiment of this application, for one diagnostic application, the diagnostic authorization apparatus may generate a diagnostic key, and send the diagnostic key to the diagnostic apparatus and the vehicle, to ensure that the diagnostic keys in the diagnostic apparatus and the vehicle are the same, thereby ensuring smooth vehicle diagnosis. In addition, the diagnostic authorization apparatus may encrypt the diagnostic key separately by using the public key from the diagnostic apparatus and the preset encryption key. In one aspect, security of the diagnostic key can be ensured, and in another aspect, the diagnostic apparatus can be prevented from decrypting the diagnostic key of the vehicle and the vehicle can be prevented from decrypting the diagnostic key of the diagnostic apparatus, so that security of the diagnostic key can be further ensured.

In some embodiments, when the first diagnostic item includes a plurality of diagnostic items, the diagnostic authorization apparatus may generate a diagnostic key when generating the first diagnostic key. The diagnostic key may be used as a diagnostic key of each diagnostic item. To be specific, the first diagnostic keys of the plurality of diagnostic items may be the same. In this embodiment, if a malicious device obtains a diagnostic key of a diagnostic item, the malicious device may use the diagnostic key to execute another diagnostic item, causing a data security problem and a vehicle fault.

For example, if the first diagnostic item includes firmware flashing and exhaust emission diagnosis, the first diagnostic key of firmware flashing is the same as that of exhaust emission diagnosis. If the malicious device can obtain the first diagnostic key of exhaust emission diagnosis, the malicious device may write malicious firmware by using the first diagnostic key, causing a vehicle fault. For example, when the first diagnostic item includes obtaining a video of the vehicle, after the malicious device obtains the first diagnostic key of exhaust emission diagnosis, the malicious device may further obtain the video of the vehicle by using the first diagnostic key, causing user privacy leakage, and user experience is poor.

In some embodiments, for different diagnostic items in the first diagnostic item, the diagnostic authorization apparatus may generate different first diagnostic keys. The diagnostic authorization apparatus may encrypt the first diagnostic key of each diagnostic item by using the first public key, to obtain a ciphertext corresponding to each diagnostic item. Correspondingly, the first ciphertext may include the ciphertext obtained by encrypting the first diagnostic key of each diagnostic item by using the first public key. For example, the first ciphertext may include an identifier of each diagnostic item and a ciphertext corresponding to the identifier of each diagnostic item.

The diagnostic authorization apparatus may encrypt the first diagnostic key of each diagnostic item by using the preset encryption key, to obtain a ciphertext corresponding to each diagnostic item. Correspondingly, the third ciphertext may include the ciphertext obtained by encrypting the first diagnostic key of each diagnostic item by using the preset encryption key. For example, the third ciphertext may include the identifier of each diagnostic item and a ciphertext corresponding to the identifier of each diagnostic item.

In this embodiment, the diagnostic apparatus may decrypt each ciphertext in the first ciphertext by using the first private key, to obtain the first diagnostic key of each diagnostic item. The vehicle may decrypt each ciphertext in the third ciphertext by using the preset encryption key, to obtain the first diagnostic key of each diagnostic item. The diagnostic apparatus may execute each diagnostic item in collaboration with the vehicle by using the first diagnostic key of each diagnostic item.

For example, the diagnostic apparatus may send a third diagnostic instruction to the vehicle, where the third diagnostic instruction may include the identifier of each diagnostic item and the first diagnostic key of each diagnostic item. In response to the third diagnostic instruction, the vehicle may verify the first diagnostic key that is of each diagnostic item and that is in the third diagnostic instruction based on the first diagnostic key that is of each diagnostic item and that is obtained through decryption by the vehicle. For a diagnostic item on which verification succeeds, the vehicle may execute the diagnostic item. For a diagnostic item on which verification does not succeed, the vehicle may not execute the diagnostic item.

Similarly, for the second diagnostic application, for different diagnostic items in the first diagnostic item, the diagnostic authorization apparatus may generate different second diagnostic keys. The diagnostic authorization apparatus may encrypt the second diagnostic key of each diagnostic item by using the second public key, to obtain a ciphertext corresponding to each diagnostic item. Correspondingly, the second ciphertext may include the ciphertext obtained by encrypting the second diagnostic key of each diagnostic item by using the second public key. For example, the second ciphertext may include the identifier of each diagnostic item and a ciphertext corresponding to the identifier of each diagnostic item. The diagnostic authorization apparatus may encrypt the second diagnostic key of each diagnostic item by using the preset encryption key, to obtain a ciphertext corresponding to each diagnostic item. Correspondingly, the fourth ciphertext may include the ciphertext obtained by encrypting the second diagnostic key of each diagnostic item by using the preset encryption key. For example, the fourth ciphertext may include the identifier of each diagnostic item and a ciphertext corresponding to the identifier of each diagnostic item.

The diagnostic apparatus may decrypt each ciphertext in the second ciphertext by using the second private key, to obtain the second diagnostic key of each diagnostic item. The vehicle may decrypt each ciphertext in the fourth ciphertext by using the preset encryption key, to obtain the second diagnostic key of each diagnostic item. The diagnostic apparatus may execute each diagnostic item in collaboration with the vehicle based on the second diagnostic key of each diagnostic item.

In this embodiment of this application, for different diagnostic items in the first diagnostic item, the diagnostic authorization apparatus may generate different diagnostic keys, so that security of vehicle diagnostic can be improved.

In some embodiments, the first diagnostic item may be all diagnostic items of the vehicle or preset diagnostic items. If the diagnostic apparatus needs to diagnose all the diagnostic items of the vehicle each time the diagnostic apparatus diagnoses the vehicle, workload is heavy and long time is taken. If the diagnostic apparatus diagnoses the preset diagnostic items each time the diagnostic apparatus diagnoses the vehicle, omission of diagnostic items and inflexibility of diagnosis may be caused.

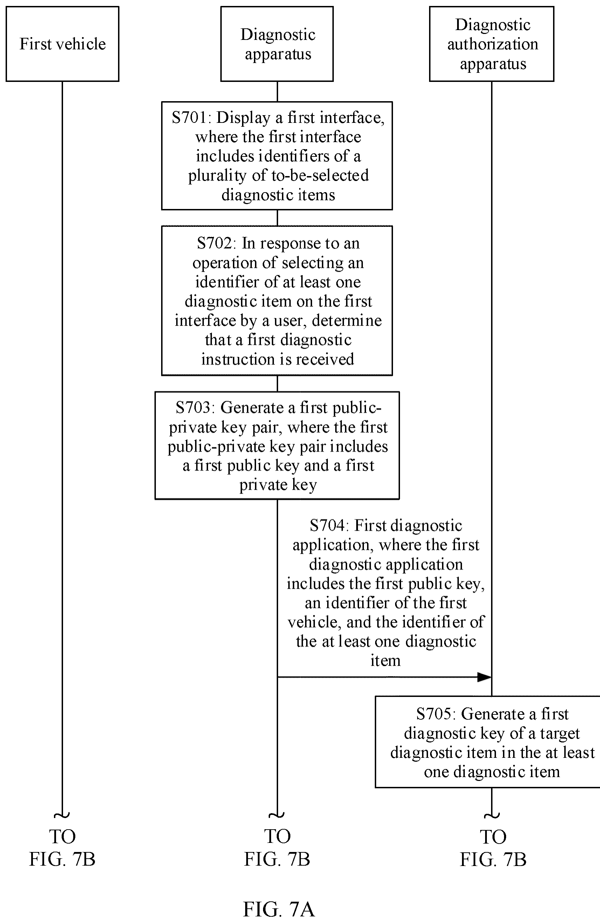

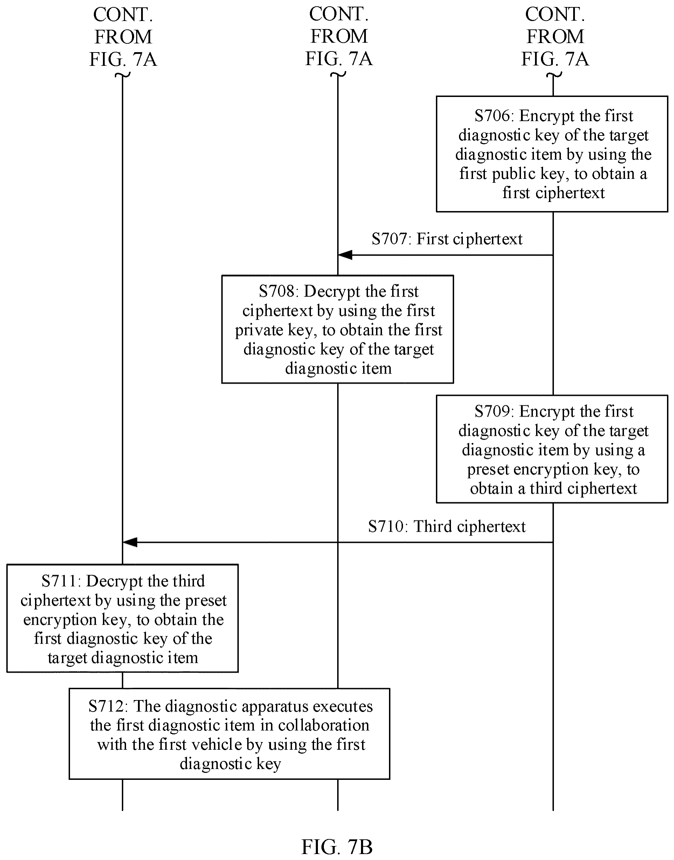

To resolve this problem, in this embodiment of this application, each time the diagnostic apparatus diagnoses the vehicle, the user may customize a diagnostic item of the vehicle, so that flexibility is high, and vehicle diagnosis can be performed in a targeted manner. With reference to FIG. 7A and FIG. 7B, the following describes a vehicle diagnostic method provided in an embodiment of this application by using one diagnosis (for example, a first diagnostic instruction) of a vehicle as an example.

With reference to FIG. 7A and FIG. 7B, the vehicle diagnostic method provided in this embodiment of this application may include the following steps.

S701: A diagnostic apparatus displays a first interface, where the first interface includes identifiers of a plurality of to-be-selected diagnostic items.

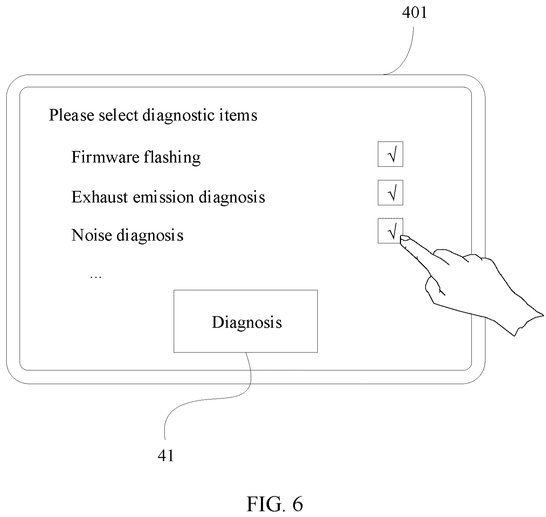

In some embodiments, a user may customize a diagnostic item on the diagnostic apparatus or the vehicle. Using the diagnostic apparatus as an example, for example, the first interface may include an input box, and the user may enter a name of a diagnostic item in the input box. For example, with reference to FIG. 6, the first interface 401 may further include identifiers 42 of a plurality of to-be-selected diagnostic items. In FIG. 6, a name of a diagnostic item represents an identifier of the diagnostic item. A manner of customizing a diagnostic item by the user is not limited in this embodiment of this application. It should be understood that an example in which the user customizes a diagnostic item on the diagnostic apparatus is used in FIG. 7A and FIG. 7B.

In some embodiments, using the vehicle as an example, for example, a second interface 402 of the vehicle may include an input box, and the user may enter a name of a diagnostic item in the input box. For example, the second interface 402 of the vehicle may further include the identifiers 42 of the plurality of to-be-selected diagnostic items, and the user may select an identifier of at least one diagnostic item from the identifiers 42 of the plurality of to-be-selected diagnostic items.

S702: In response to an operation of selecting the identifier of at least one diagnostic item on the first interface by the user, determine that a first diagnostic instruction is received.

In some embodiments, the user may select the identifier of the at least one diagnostic item from the identifiers of the plurality of to-be-selected diagnostic items, to trigger the diagnostic apparatus to receive the first diagnostic instruction. For example, an example in which the user selects three diagnostic items: firmware flashing, exhaust emission diagnosis, and noise diagnosis is used in FIG. 6.

In some embodiments, the user may select the identifier of the at least one diagnostic item from the identifiers of the plurality of to-be-selected diagnostic items, and operate a diagnostic control 41, so that the diagnostic apparatus can be triggered to receive the first diagnostic instruction.

S703: The diagnostic apparatus generates a first public-private key pair, where the first public-private key pair includes a first public key and a first private key.

For S703, refer to the related description in S501.

S704: The diagnostic apparatus sends a first diagnostic application to a diagnostic authorization apparatus, where the first diagnostic application includes the first public key, an identifier of a first vehicle, and the identifier of the at least one diagnostic item.

In this embodiment, because the user selects the identifier of the at least one diagnostic item through customization, the first diagnostic application may include the identifier of the at least one diagnostic item.

In some embodiments, the diagnostic apparatus and the diagnostic authorization apparatus may pre-store a same preset private key and a same preset public key. The preset private key is used to sign data, and the preset public key is used to perform signature verification on data obtained after signature. Specific principles of signature and signature verification are not described in this embodiment of this application. In this embodiment of this application, the diagnostic apparatus may sign the identifier of the first vehicle and the identifier of the at least one diagnostic item by using the preset private key, to obtain a signature file, where the first diagnostic application includes the signature file and the first public key.

S705: The diagnostic authorization apparatus generates a first diagnostic key of a target diagnostic item in the at least one diagnostic item.

In some embodiments, the diagnostic authorization apparatus receives the first diagnostic application from the diagnostic apparatus, may obtain the first public key, and perform signature verification on the signature file by using the preset public key, to determine whether the diagnostic apparatus has a permission to apply for a diagnostic key. When signature verification succeeds, the diagnostic authorization apparatus determines that the diagnostic apparatus has the permission to apply for the diagnostic key. When signature verification does not succeed, the diagnostic authorization apparatus determines that the diagnostic apparatus does not have the permission to apply for the diagnostic key, and the diagnostic authorization apparatus may not respond.

In some embodiments, the first diagnostic item in the foregoing embodiments may be the target diagnostic item in the at least one diagnostic item.

In some embodiments, when signature verification succeeds, the diagnostic authorization apparatus may obtain the identifier of the first vehicle and the identifier of the at least one diagnostic item. The diagnostic authorization apparatus may generate the first diagnostic key of each diagnostic item in the at least one diagnostic item. The first diagnostic key of each diagnostic item may be different. In this embodiment, the at least one diagnostic item may be used as the target diagnostic item.

In some embodiments, the target diagnostic item may be an authorized diagnostic item in the at least one item. There may be at least one target diagnostic item. When there are a plurality of target diagnostic items, different target diagnostic items have different first diagnostic keys.

For different vehicles, authorized diagnostic items of the vehicles may be different, and the authorized diagnostic items of the vehicles may be obtained through purchase or application by the user. For example, the authorized diagnostic items of a vehicle 1 may include a diagnostic item 1 and a diagnostic item 2, and the authorized diagnostic items of a vehicle 2 may include the diagnostic item 1 and a diagnostic item 3.

In some embodiments, the authorized diagnostic items of the vehicle may be stored in authorization information of the vehicle. The diagnostic authorization apparatus may pre-store the authorization information of the vehicle, or when vehicle diagnosis is performed, the vehicle may send the authorization information of the vehicle to the diagnostic authorization apparatus. For example, the authorization information of the vehicle may be a work order, and the work order may include identifiers of the authorized diagnostic items of the vehicle. In this embodiment, the diagnostic authorization apparatus may determine an authorized target diagnostic item in the at least one diagnostic item based on the authorization information of the first vehicle.

In some embodiments, when receiving the first diagnostic application, the diagnostic authorization apparatus may further display the identifier that is of the at least one diagnostic item and that is in the first diagnostic application, and the target diagnostic item in the at least one diagnostic item is determined through manual review. A diagnostic item on which manual review succeeds may be used as the target diagnostic item. In this embodiment, the diagnostic authorization apparatus may determine the target diagnostic item in the at least one diagnostic item based on user authorization information, where the user authorization information may indicate diagnostic items that are of the first vehicle and that are authorized by the user. The user authorization information may include an identifier of a diagnostic item on which manual review succeeds.

In some embodiments, the diagnostic authorization apparatus may further determine the target diagnostic item in the at least one diagnostic item based on the authorization information of the first vehicle and the user authorization information. For example, the diagnostic authorization apparatus may use, as the target diagnostic item, a diagnostic item that is included in both the authorized diagnostic items of the first vehicle and the diagnostic items that are of the first vehicle and that are authorized by the user.

S706: The diagnostic authorization apparatus encrypts the first diagnostic key of the target diagnostic item by using the first public key, to obtain a first ciphertext.

S707: The diagnostic authorization apparatus sends the first ciphertext to the diagnostic apparatus.

S708: The diagnostic apparatus decrypts the first ciphertext by using the first private key, to obtain the first diagnostic key of the target diagnostic item.

S709: The diagnostic authorization apparatus encrypts the first diagnostic key of the target diagnostic item by using a preset encryption key, to obtain a third ciphertext.

S710: The diagnostic authorization apparatus sends the third ciphertext to the first vehicle.

S711: The first vehicle decrypts the third ciphertext by using the preset encryption key, to obtain the first diagnostic key of the target diagnostic item.

It should be understood that there is no sequence difference between S706 to S708 and S709 to S711, and the two may be performed simultaneously.

S712: The diagnostic apparatus executes the first diagnostic item in collaboration with the first vehicle by using the first diagnostic key.

For S706 to S712, refer to related descriptions in S504 to S510.

In this embodiment of this application, the user may customize the diagnostic items of the first vehicle, to adapt to a user requirement, so that user experience can be improved. In addition, for the diagnostic items customized by the user, the diagnostic authorization apparatus may further perform permission authentication. For the authorized target diagnostic item in the diagnostic items customized by the user, the diagnostic authorization apparatus may generate the first diagnostic key, to ensure accuracy of vehicle diagnosis, and avoid a problem that user privacy is leaked because the diagnostic apparatus diagnoses an unauthorized diagnostic item. In addition, for different target diagnostic items, the diagnostic authorization apparatus may generate different first diagnostic keys, to ensure safety of vehicle diagnosis.

Using one diagnosis (for example, the first diagnostic instruction) of the vehicle as an example, to avoid a problem that the first diagnostic key is easily intercepted because a third diagnostic instruction directly carries the first diagnostic key, in some embodiments, the diagnostic apparatus may encrypt an identifier of the first diagnostic item by using the first diagnostic key, to obtain a ciphertext. The diagnostic apparatus may send the third diagnostic instruction to the first vehicle, where the third diagnostic instruction may include the ciphertext. The first vehicle may decrypt the ciphertext by using the first diagnostic key, to obtain the identifier of the first diagnostic item. The first diagnostic key is a diagnostic key applied for the first diagnostic item, to be specific, the first diagnostic key corresponds to the first diagnostic item. Therefore, the first vehicle may execute the first diagnostic item.

In some embodiments, when the diagnostic apparatus decrypts the first ciphertext to obtain the first diagnostic key of the first diagnostic item, if a malicious device indicates the diagnostic apparatus to encrypt an identifier of a second diagnostic item by using the first diagnostic key, but the first diagnostic key does not correspond to the second diagnostic item, a security problem of vehicle diagnosis is caused. For example, the first diagnostic key is a key applied by the diagnostic apparatus for the diagnostic item "exhaust emission diagnosis", but the malicious device indicates the diagnostic apparatus to encrypt the identifier of the second diagnostic item "firmware flashing" by using the first diagnostic key. In this example, although the first vehicle may decrypt the ciphertext by using the first diagnostic key, the first vehicle cannot determine whether a diagnostic item obtained by decrypting the ciphertext is a diagnostic item corresponding to the first diagnostic key. Therefore, the first vehicle incorrectly executes the diagnostic item of firmware flashing, causing a vehicle security problem.

In this embodiment of this application, to resolve this problem, a diagnostic item supported by a diagnostic key may be preconfigured in the first vehicle. For example, the first vehicle may store a first mapping relationship, where the first mapping relationship may be an identifier of a diagnostic key and an identifier of a diagnostic item to which the identifier of the diagnostic key is mapped. The identifier of the diagnostic item to which the identifier of the diagnostic key is mapped indicates the diagnostic item supported by the diagnostic key. The identifier of the diagnostic key may be, for example, a number, or an identifier of the diagnostic item corresponding to the diagnostic key. Similarly, the first mapping relationship may alternatively be preconfigured in the diagnostic apparatus, so that the diagnostic apparatus can detect, based on the first mapping relationship, whether the first diagnostic key corresponds to the encrypted diagnostic item.

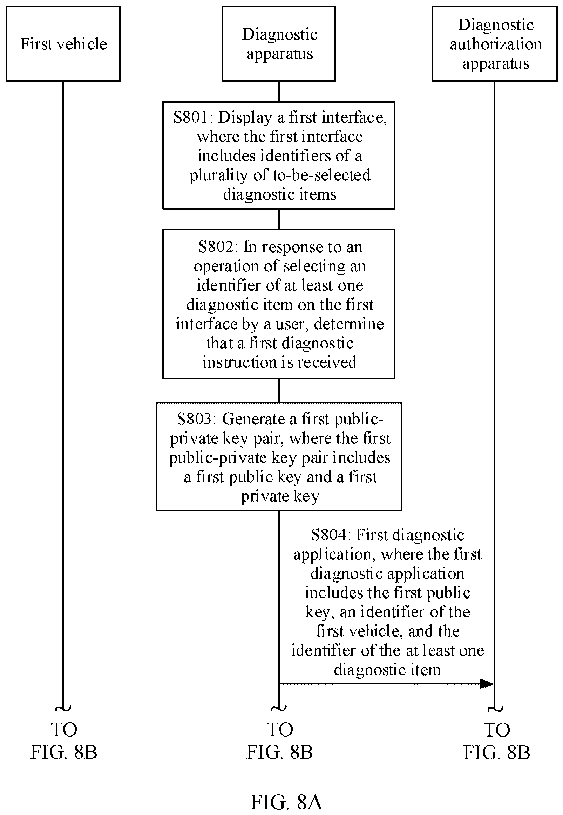

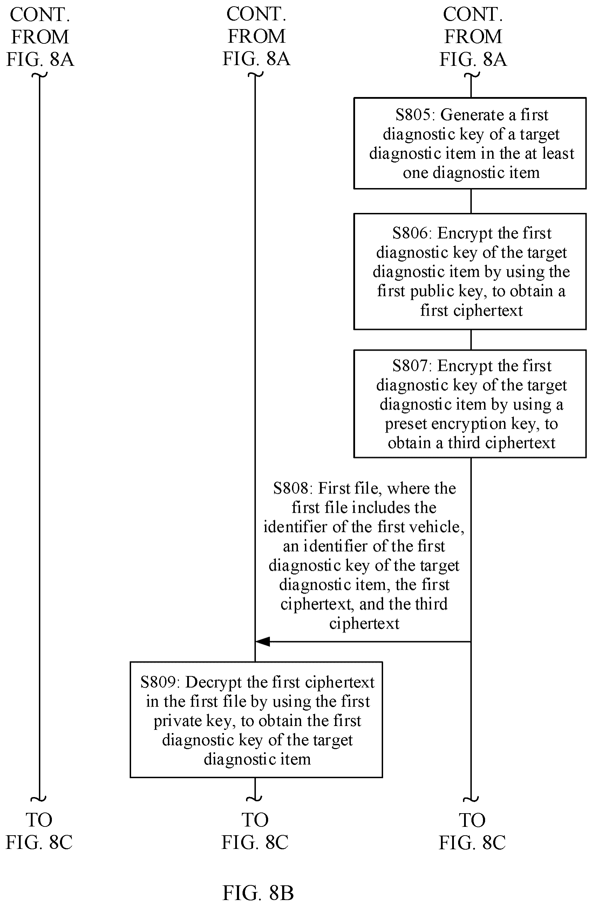

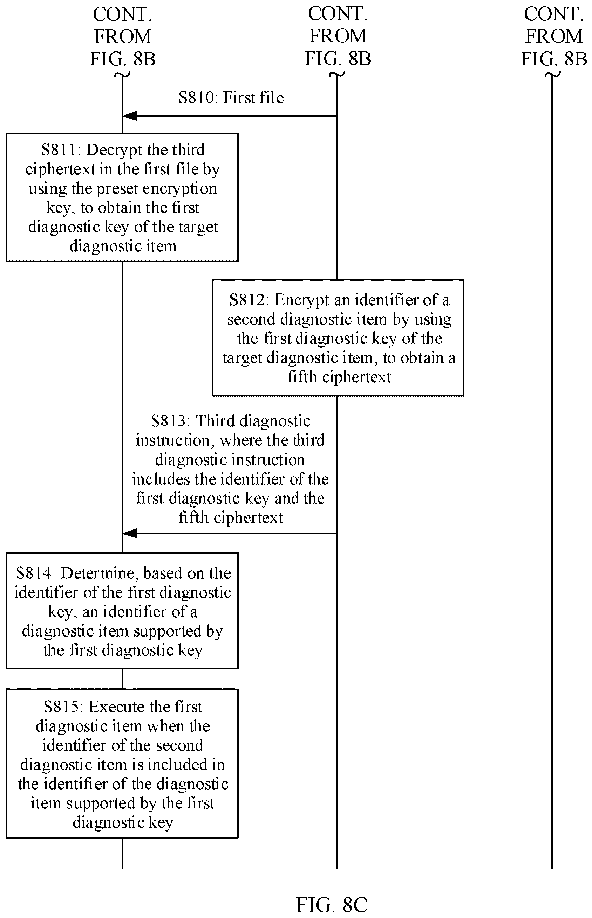

FIG. 8A, FIG. 8B, and FIG. 8C are a schematic flowchart of another embodiment of a vehicle diagnostic method according to an embodiment of this application. It should be understood that, an example in which a first ciphertext and a third ciphertext are included in a first file, and a diagnostic authorization apparatus sends the first file to a first vehicle by using a diagnostic apparatus is used in FIG. 8A, FIG. 8B, and FIG. 8C for description.

With reference to FIG. 8A, FIG. 8B, and FIG. 8C, the vehicle diagnostic method provided in this embodiment of this application may include the following steps.

S801: The diagnostic apparatus displays a first interface, where the first interface includes identifiers of a plurality of to-be-selected diagnostic items.

S802: In response to an operation of selecting an identifier of at least one diagnostic item on the first interface by a user, determine that a first diagnostic instruction is received.

S803: The diagnostic apparatus generates a first public-private key pair in response to the first diagnostic instruction, where the first public-private key pair includes a first public key and a first private key.

S804: The diagnostic apparatus sends a first diagnostic application to the diagnostic authorization apparatus, where the first diagnostic application includes the first public key, an identifier of the first vehicle, and the identifier of the at least one diagnostic item.

S805: The diagnostic authorization apparatus generates a first diagnostic key of a target diagnostic item in the at least one diagnostic item.

For S801 to S805, refer to descriptions in S701 to S705. It should be understood that the target diagnostic item may be used as a first diagnostic item.

S806: The diagnostic authorization apparatus encrypts the first diagnostic key of the target diagnostic item by using the first public key, to obtain a first ciphertext.

The first ciphertext includes a ciphertext obtained by encrypting the first diagnostic key of each target diagnostic item by using the first public key.

For example, using an example in which the target diagnostic item includes a diagnostic item 1 and a diagnostic item 2, for example, the diagnostic item 1 is firmware flashing, and the diagnostic item 2 is exhaust emission diagnosis, the first diagnostic key of the diagnostic item 1 is denoted as a key 1, and the first diagnostic key of the diagnostic item 2 is denoted as a key 2. The diagnostic authorization apparatus may encrypt the key 1 by using the first public key, to obtain a ciphertext 1, and the diagnostic authorization apparatus may encrypt the key 2 by using the first public key, to obtain a ciphertext 2. The first ciphertext includes the ciphertext 1 and the ciphertext 2.

S807: The diagnostic authorization apparatus encrypts the first diagnostic key of the target diagnostic item by using a preset encryption key, to obtain a third ciphertext.

The third ciphertext includes a ciphertext obtained by encrypting the first diagnostic key of each target diagnostic item by using the preset encryption key.

For example, using an example in which the target diagnostic item includes the diagnostic item 1 and the diagnostic item 2, for example, the diagnostic item 1 is firmware flashing, and the diagnostic item 2 is exhaust emission diagnosis, the first diagnostic key of the diagnostic item 1 is denoted as the key 1, and the first diagnostic key of the diagnostic item 2 is denoted as the key 2. The diagnostic authorization apparatus may encrypt the key 1 by using the preset encryption key, to obtain a ciphertext 1A, and the diagnostic authorization apparatus may encrypt the key 2 by using the preset encryption key, to obtain a ciphertext 2A. The third ciphertext includes the ciphertext 1A and the ciphertext 2A.

S808: The diagnostic authorization apparatus sends the first file to the diagnostic apparatus, where the first file includes the identifier of the first vehicle, an identifier of the first diagnostic key of the target diagnostic item, the first ciphertext, and the third ciphertext.

The identifier of the first vehicle is, for example, a VIN code of the first vehicle. The identifier of the first diagnostic key of the target diagnostic item may include: an identifier of the first diagnostic key of each target diagnostic item, where the identifier of the first diagnostic key may be, for example, a number or an identifier of a diagnostic item. For example, an identifier of the first diagnostic key key 1 of the diagnostic item 1 may be a number 1, the diagnostic item 1, or firmware flashing. The following is described by using an example in which the identifier of the first diagnostic key is a number. For example, an identifier of the first diagnostic key key 1 of the diagnostic item 1 is 1, and an identifier of the first diagnostic key key 2 of the diagnostic item 2 is 2.

The first file may be shown in the following Table 1:

**Table 1**

| | | | |
|---|---|---|---|
| First file | VIN code of the first vehicle | | |
| | Expire time (expire time) | | |
| | Encrypt the identifier of each target diagnostic item by using the first public key | First ciphertext | Identifier of the first diagnostic key |
| | | Ciphertext 1 | 1 (or firmware flashing) |
| | | Ciphertext 2 | 2 (or exhaust emission diagnosis) |
| | | | |
| | Encrypt the identifier of each target diagnostic item by using the preset encryption key | Third ciphertext | Identifier of the first diagnostic key |
| | | Ciphertext 1A | 1 (or firmware flashing) |
| | | Ciphertext 2A | 2 (or exhaust emission diagnosis) |

As shown in Table 1, in some embodiments, the first file may further include an expire time (expire time), where the expire time indicates a valid use time of the first file. When the expire time is exceeded, the first file expires, and the first diagnostic key in the first file expires.

In some embodiments, the first file may further include an identifier of each target diagnostic item.

In some embodiments, when the first diagnostic application includes the identifier of the first vehicle and an identifier of a second vehicle, using an example in which the target diagnostic item includes the diagnostic item 1 and the diagnostic item 2, for example, the diagnostic item 1 is firmware flashing, and the diagnostic item 2 is exhaust emission diagnosis, in this embodiment, the diagnostic authorization apparatus may generate the first diagnostic key of the first diagnostic item of the first vehicle and the first diagnostic key of the first diagnostic item of the second vehicle. The first diagnostic key of the diagnostic item 1 of the first vehicle is denoted as the key 1, the first diagnostic key of the diagnostic item 2 of the first vehicle is denoted as the key 2, the first diagnostic key of the diagnostic item 1 of the second vehicle is denoted as a key 3, and the first diagnostic key of the diagnostic item 2 of the second vehicle is denoted as a key 4.

The diagnostic authorization apparatus may encrypt the key 1 by using the first public key, to obtain the ciphertext 1, the diagnostic authorization apparatus may encrypt the key 2 by using the first public key, to obtain the ciphertext 2, the diagnostic authorization apparatus may encrypt the key 3 by using the first public key, to obtain a ciphertext 3, and the diagnostic authorization apparatus may encrypt the key 4 by using the first public key, to obtain a ciphertext 4. The first ciphertext may include the ciphertext 1, the ciphertext 2, the ciphertext 3, and the ciphertext 4.

Correspondingly, the diagnostic authorization apparatus may encrypt the key 1 by using the preset encryption key, to obtain the ciphertext 1A, the diagnostic authorization apparatus may encrypt the key 2 by using the preset encryption key, to obtain the ciphertext 2A, the diagnostic authorization apparatus may encrypt the key 3 by using the preset encryption key, to obtain a ciphertext 3A, and the diagnostic authorization apparatus may encrypt the key 4 by using the preset encryption key, to obtain a ciphertext 4A. The third ciphertext may include the ciphertext 1A, the ciphertext 2A, the ciphertext 3A, and the ciphertext 4A.

Correspondingly, the first file may be shown in the following Table 2:

**Table 2**

| | | | |
|---|---|---|---|
| First file | VIN code of the first vehicle | | |
| | Expire time (expire time) | | |
| | Encrypt the identifier of each target diagnostic item by using the first public key | First ciphertext | Identifier of the first diagnostic key |
| | | Ciphertext 1 | 1 (or firmware flashing) |
| | | Ciphertext 2 | 2 (or exhaust emission diagnosis) |
| | | | |
| | Encrypt the identifier of each target diagnostic item by using the preset encryption key | Third ciphertext | Identifier of the first diagnostic key |
| | | Ciphertext 1A | 1 (or firmware flashing) |
| | | Ciphertext 2A | 2 (or exhaust emission diagnosis) |
| | VIN code of the second vehicle | | |
| | Expire time (expire time) | | |
| | Encrypt the identifier of each target diagnostic item by using the first public key | First ciphertext | Identifier of the first diagnostic key |
| | | Ciphertext 3 | 1 (or firmware flashing) |
| | | Ciphertext 4 | 2 (or exhaust emission diagnosis) |
| | | | |
| | Encrypt the identifier of each target diagnostic item by using the preset encryption key | Third ciphertext | Identifier of the first diagnostic key |
| | | Ciphertext 3A | 1 (or firmware flashing) |
| | | Ciphertext 4A | 2 (or exhaust emission diagnosis) |

S809: The diagnostic apparatus decrypts the first ciphertext in the first file by using the first private key, to obtain the first diagnostic key of the target diagnostic item.

For S809, refer to the related description of S708.

S810: The diagnostic apparatus sends the first file to the first vehicle.

There is no sequence difference between S810 and S809, and the two may be performed simultaneously.

In some embodiments, after receiving the first file, the diagnostic apparatus may copy the first file and send the first file to the first vehicle.

S811: The first vehicle decrypts the third ciphertext in the first file by using the preset encryption key, to obtain the first diagnostic key of the target diagnostic item.

For S811, refer to the related description of S711.

S812: The diagnostic apparatus encrypts an identifier of the second diagnostic item by using the first diagnostic key of the target diagnostic item, to obtain a fifth ciphertext.

S813: The diagnostic apparatus sends a third diagnostic instruction to the first vehicle, where the third diagnostic instruction includes the identifier of the first diagnostic key and the fifth ciphertext.

To avoid a problem that the first diagnostic key is easily intercepted because the first diagnostic key is directly carried in the third diagnostic instruction, in some embodiments, the third diagnostic instruction may not directly carry the first diagnostic key, but carry the identifier of the first diagnostic key. For example, using Table 1 as an example, the third diagnostic instruction may include an identifier 1 of the first diagnostic key of the diagnostic item 1 and an identifier 2 of the first diagnostic key of the diagnostic item 2.

In some embodiments, the third diagnostic instruction may include only the identifier of the first diagnostic key, and the first vehicle may verify an identity of the diagnostic apparatus by using the identifier of the first diagnostic key. The first file may include the identifier of the first diagnostic key. When the first file includes the identifier that is of the first diagnostic key and that is carried in the third diagnostic instruction, verification succeeds; or when the first file does not include the identifier that is of the first diagnostic key and that is carried in the third diagnostic instruction, verification does not succeed.

To further improve security of vehicle diagnosis, in some embodiments, the first vehicle may verify the identifier that is of the second diagnostic item and that is encrypted by the diagnostic apparatus by using the first diagnostic key, to prevent a malicious device from maliciously indicating, by using the first diagnostic key, the first vehicle to execute another diagnostic item, thereby avoiding a security problem.

In this embodiment of this application, the diagnostic apparatus may encrypt the identifier of the second diagnostic item by using the first diagnostic key, to obtain the fifth ciphertext. The identifier of the second diagnostic item may be the same as or different from the identifier of the target diagnostic item. Correspondingly, the third diagnostic instruction may include the identifier of the first diagnostic key and the fifth ciphertext.

S814: The first vehicle determines, based on the identifier of the first diagnostic key, an identifier of a diagnostic item supported by the first diagnostic key.

The diagnostic apparatus applies for the first diagnostic key to encrypt the identifier of the first diagnostic item. When the identifier of the second diagnostic item is the same as the identifier of the first diagnostic item, the diagnostic apparatus encrypts the identifier of the first diagnostic item by using the first diagnostic key, to obtain the fifth ciphertext. For example, using the diagnostic item 1 (firmware flashing) in the target diagnostic item as an example, the first diagnostic key of the diagnostic item 1 is the key 1, and the diagnostic apparatus may encrypt an identifier of the diagnostic item 1 by using the key 1, to obtain the fifth ciphertext. The identifier of the diagnostic item 1 may be, for example, "diagnostic item 1" or "firmware flashing".

However, after the diagnostic apparatus decrypts the first ciphertext to obtain the first diagnostic key key 1 of the diagnostic item 1, if the malicious device indicates the diagnostic apparatus to encrypt, by using the key 1, the identifier of the second diagnostic item, for example, "obtaining a video of the vehicle", to obtain the fifth ciphertext. The identifier of the second diagnostic item is different from the identifier of the target diagnostic item (for example, the diagnostic item 1). If the first vehicle may decrypt the fifth ciphertext by using the first diagnostic key based on the identifier that is of the first diagnostic key and that is carried in the third diagnostic instruction, to obtain the identifier of the second diagnostic item such as "obtaining a video of the vehicle", and if the first vehicle does not verify whether "obtaining a video of the vehicle" is a diagnostic item corresponding to the first diagnostic key, but directly executes the diagnostic item "obtaining a video of the vehicle", the video of the first vehicle is leaked to a malicious device, causing a security problem.

To resolve this problem, in some embodiments, a first mapping relationship may be preconfigured in the first vehicle, where the first mapping relationship represents a diagnostic item supported by a diagnostic key. For example, the first mapping relationship may include an identifier of a diagnostic key and an identifier of a diagnostic item to which the identifier of the diagnostic key is mapped. The identifier of the diagnostic key may be, for example, a number, or an identifier of the diagnostic item corresponding to the diagnostic key.

For example, the first mapping relationship may be stored in the first vehicle in a form of a table, as shown in Table 3.

**Table 3**

| Identifier of the diagnostic key | Identifier of the diagnostic item |
|---|---|
| 1 | Firmware flashing |
| 2 | Exhaust emission diagnosis |
| 3 | Noise diagnosis |
| ... | ... |
| N | Obtaining a video of the vehicle |

In some embodiments, an identifier of one diagnostic key may correspond to an identifier of at least one diagnostic item. In Table 3, an example in which an identifier of one diagnostic key corresponds to an identifier of one diagnostic item is used for description.

In this embodiment of this application, in response to the third diagnostic instruction, the first vehicle may determine, based on the identifier that is of the first diagnostic key and that is in the third diagnostic instruction and the first mapping relationship, an identifier of a diagnostic item supported by the first diagnostic key. For example, the first vehicle determines, based on the identifier "1" that is of the first diagnostic key and that is in the third diagnostic instruction and the foregoing Table 1, that the identifier of the diagnostic item supported by the first diagnostic key is "firmware flashing".

S815: The first vehicle executes the first diagnostic item when the identifier of the second diagnostic item is included in the identifier of the diagnostic item supported by the first diagnostic key.

In response to the third diagnostic instruction, the first vehicle may determine, based on the identifier that is of the first diagnostic key and that is in the third diagnostic instruction, the first diagnostic key corresponding to the identifier of the first diagnostic key, and the first vehicle may decrypt the fifth ciphertext by using the first diagnostic key, to obtain the identifier of the second diagnostic item.

In some embodiments, when the identifier of the second diagnostic item is included in the identifier of the diagnostic item supported by the first diagnostic key, the first vehicle may execute the target diagnostic item (that is, the second diagnostic item). In some embodiments, when the identifier of the second diagnostic item is not included in the identifier of the diagnostic item supported by the first diagnostic key, the first vehicle may determine that the identifier of the second diagnostic item is added by the malicious device, and the first vehicle may not execute the second diagnostic item.

In this embodiment of this application, the first mapping relationship may be preconfigured in the first vehicle, where the first mapping relationship represents a diagnostic item supported by a diagnostic key. When the first vehicle receives the third diagnostic instruction, the first vehicle may verify, by using the first mapping relationship, whether the second diagnostic item encrypted by using the first diagnostic key is a diagnostic item supported by the first diagnostic key. When the second diagnostic item is a diagnostic item supported by the first diagnostic key, the first vehicle may execute the second diagnostic item. When the second diagnostic item is not a diagnostic item supported by the first diagnostic key, the first vehicle may not execute the second diagnostic item. In this embodiment of this application, the first vehicle may verify the second diagnostic item encrypted by using the first diagnostic key, so that a malicious device can be prevented from modifying, in the diagnostic apparatus, the diagnostic item supported by the first diagnostic key, thereby ensuring security of vehicle diagnosis.

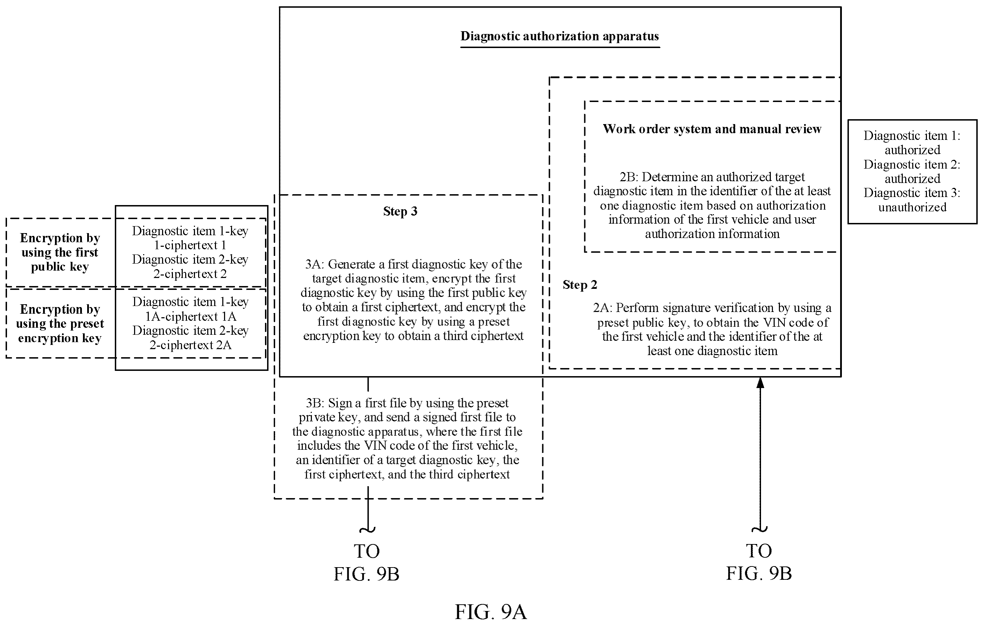

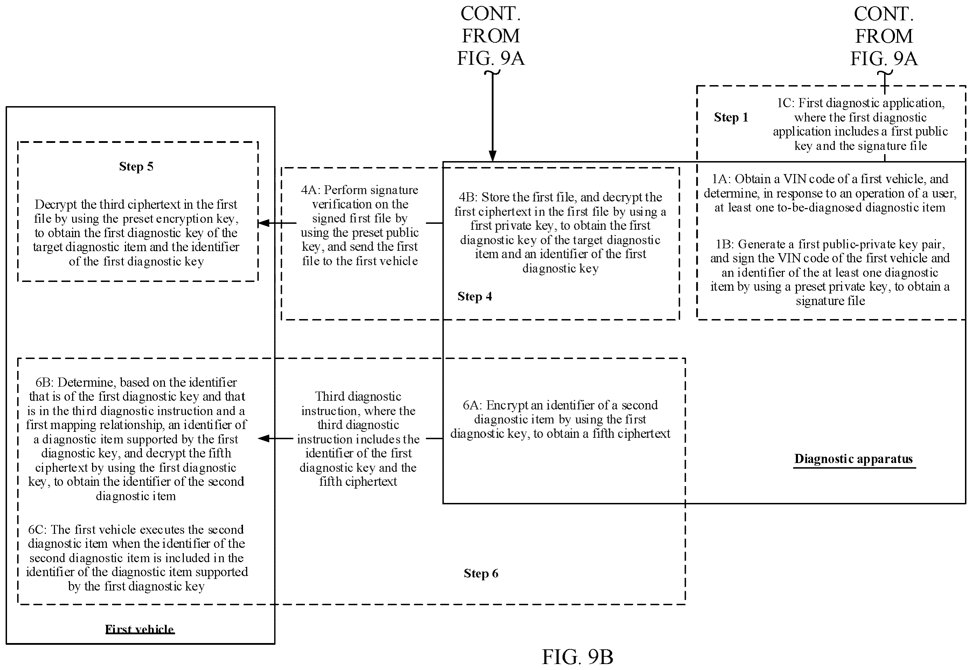

FIG. 9A and FIG. 9B are a flowchart of another embodiment of a vehicle diagnostic method according to an embodiment of this application. In FIG. 9A and FIG. 9B, an example in which a diagnostic apparatus diagnoses a first vehicle is used for description. With reference to FIG. 9A and FIG. 9B, the vehicle diagnostic method provided in this embodiment of this application may include step 1 to step 6.

Step 1 may include 1A to 1C.

1A: The diagnostic apparatus obtains a VIN code of the first vehicle, and determines, in response to an operation of a user, at least one to-be-diagnosed diagnostic item.

1B: The diagnostic apparatus generates a first public-private key pair, and signs the VIN code of the first vehicle and an identifier of the at least one diagnostic item by using a preset private key, to obtain a signature file.

1C: The diagnostic apparatus sends a first diagnostic application to a diagnostic authorization apparatus, where the first diagnostic application includes a first public key and the signature file.

Step 2 may include 2A and 2B.

2A: The diagnostic authorization apparatus performs signature verification by using a preset public key, to obtain the VIN code of the first vehicle and the identifier of the at least one diagnostic item.

For example, an example in which the at least one diagnostic item includes a diagnostic item 1, a diagnostic item 2, and a diagnostic item 3 is used in FIG. 9A and FIG. 9B.

2B: The diagnostic authorization apparatus determines an authorized target diagnostic item in the identifier of the at least one diagnostic item based on authorization information of the first vehicle and user authorization information.

For example, an example in which the target diagnostic item includes a diagnostic item 1 and a diagnostic item 2 is used in FIG. 9A and FIG. 9B.

Step 3 may include 3A and 3B.

3A: The diagnostic authorization apparatus generates a first diagnostic key of the target diagnostic item, encrypts the first diagnostic key by using the first public key to obtain a first ciphertext, and encrypts the first diagnostic key by using a preset encryption key to obtain a third ciphertext.

3B: The diagnostic authorization apparatus signs a first file by using the preset private key, and sends a signed first file to the diagnostic apparatus, where the first file includes the VIN code of the first vehicle, the identifier of the target diagnostic key, the first ciphertext, and the third ciphertext.

Step 4 may include 4A and 4B.

4A: The diagnostic apparatus performs signature verification on the signed first file by using the preset public key, and sends the first file to the first vehicle.

4B: The diagnostic apparatus stores the first file, and decrypts the first ciphertext in the first file by using the first private key, to obtain the first diagnostic key of the target diagnostic item and an identifier of the first diagnostic key.

Step 5: The first vehicle decrypts the third ciphertext in the first file by using the preset encryption key, to obtain the first diagnostic key of the target diagnostic item and the identifier of the first diagnostic key.

Step 6 may include 6A to 6C.

6A: The diagnostic apparatus encrypts an identifier of a second diagnostic item by using the first diagnostic key, to obtain a fifth ciphertext, and sends a third diagnostic instruction to the first vehicle, where the third diagnostic instruction includes the identifier of the first diagnostic key and the fifth ciphertext.

6B: The first vehicle determines, based on the identifier that is of the first diagnostic key and that is in the third diagnostic instruction and a first mapping relationship, an identifier of a diagnostic item supported by the first diagnostic key, and decrypts the fifth ciphertext by using the first diagnostic key, to obtain the identifier of the second diagnostic item.

6C: The first vehicle executes the second diagnostic item when the identifier of the second diagnostic item is included in the identifier of the diagnostic item supported by the first diagnostic key.

It should be noted that authorization information (including but not limited to authorization information of the vehicle, user authorization, and the like) and data (including but not limited to data used for analysis, stored data, displayed data, and the like) in this application are information and data that are authorized by the user or fully authorized by all parties. In addition, collection, use, and processing of related data need to comply with related laws and regulations and standards of related countries and regions, and a corresponding operation entry is provided for the user to choose to authorize or reject.

In some embodiments, an embodiment of this application further provides a vehicle diagnostic system. The vehicle diagnostic system may include the diagnostic apparatus, the diagnostic authorization apparatus, and the vehicle in the foregoing embodiments, as shown in FIG. 2. The vehicle diagnostic system is configured to implement the vehicle diagnostic method provided in embodiments of this application. For an implementation principle and beneficial effects of the vehicle diagnostic system, refer to the descriptions in the foregoing embodiments. Details are not described herein again.

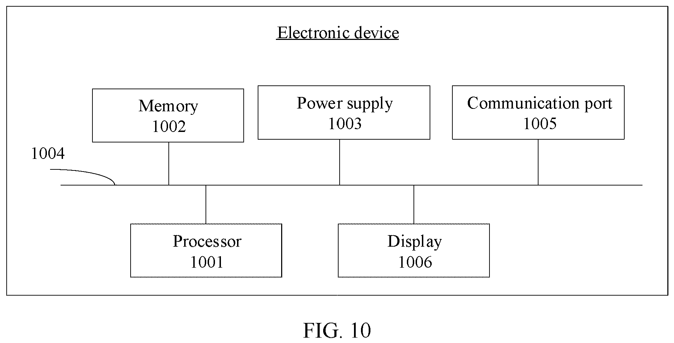

In some embodiments, an embodiment of this application further provides an electronic device. The electronic device may be the diagnostic apparatus, the diagnostic authorization apparatus, or the vehicle in the foregoing embodiments. With reference to FIG. 10, the electronic device may include a processor 1001 (for example, a CPU) and a memory 1002. The memory 1002 may include a high-speed random-access memory (random-access memory, RAM), and may further include a non-volatile memory (non-volatile memory, NVM), for example, at least one magnetic disk memory. The memory 1002 may store various instructions, to complete various processing functions and implement the method steps in this application.

Optionally, the electronic device in this application may further include a power supply 1003, a communication bus 1004, and a communication port 1005. The communication port 1005 is configured to implement a connection and communication between the electronic device and another peripheral. In this embodiment of this application, the memory 1002 is configured to store computer-executable program code. The program code includes instructions. When the processor 1001 executes the instructions, the instructions enable the processor 1001 of the electronic device to perform the actions in the foregoing method embodiments. Implementation principles and technical effect thereof are similar to those in the foregoing method embodiments. Details are not described herein again.

Optionally, the electronic device in this application may further include a display 1006, where the display 1006 is configured to display an interface of the electronic device.

It should be noted that the modules or components in the foregoing embodiments may be configured as one or more integrated circuits for implementing the foregoing methods, for example, one or more application specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of invoking program code by a processing element, the processing element may be a general-purpose processor, for example, a central processing unit (central processing unit, CPU) or another processor that can invoke the program code, for example, a controller. For another example, the modules may be integrated together and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, wireless, or microwaves) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk) (SSD)), or the like.

The term "a plurality of" in this specification means two or more. The term "and/or" in this specification describes only an association relationship between associated objects, and indicates that three relationships may exist. For example, A and/or B may represent: Only A exists, both A and B exist, and only B exists. In addition, the character "/" in this specification usually indicates an "or" relationship between associated objects, and a character "/" in a formula usually indicates a "division" relationship between associated objects. In addition, it should be understood that, in the description of this application, terms such as "first" and "second" are used only for purposes of distinguishing descriptions, and cannot be understood as indicating or implying relative importance, or as indicating or implying a sequence.

It may be understood that various numeric numbers in embodiments of this application are merely distinguishing for ease of description, and are not intended to limit the scope of embodiments of this application.

It may be understood that, in embodiments of this application, sequence numbers of the foregoing processes do not mean execution sequences. The execution sequences of the processes should be determined based on functions and internal logics of the processes, and should not constitute any limitation on the implementation processes of embodiments of this application.

## Claims

1. A vehicle diagnostic method, applied to a vehicle, wherein the method comprises:
executing a first diagnostic item in collaboration with a diagnostic apparatus based on a first diagnostic key, wherein the first diagnostic key corresponds to a first diagnostic instruction; and
executing the first diagnostic item in collaboration with the diagnostic apparatus based on a second diagnostic key, wherein the second diagnostic key corresponds to a second diagnostic instruction, and the second diagnostic key is different from the first diagnostic key.

2. The method according to claim 1, wherein before executing the first diagnostic item in collaboration with the vehicle based on the first diagnostic key, the method further comprises:
receiving a third ciphertext, wherein the third ciphertext is obtained by encrypting the first diagnostic key based on a preset encryption key; and
decrypting the third ciphertext by using the preset encryption key, to obtain the first diagnostic key; and
before executing the first diagnostic item in collaboration with the vehicle based on the second diagnostic key, the method further comprises:
receiving a fourth ciphertext, wherein the fourth ciphertext is obtained by encrypting the second diagnostic key based on the preset encryption key; and
decrypting the fourth ciphertext by using the preset encryption key, to obtain the second diagnostic key.

3. The method according to claim 2, wherein the third ciphertext and the fourth ciphertext are from the diagnostic apparatus.

4. The method according to claim 2 or 3, wherein executing the first diagnostic item in collaboration with the diagnostic apparatus based on the first diagnostic key comprises:
receiving a third diagnostic instruction from the diagnostic apparatus, wherein the third diagnostic instruction comprises an identifier of the first diagnostic key obtained by decrypting a first ciphertext by the diagnostic apparatus;
verifying the first diagnostic key in the third diagnostic instruction based on the first diagnostic key obtained by decrypting the third ciphertext and the identifier of the first diagnostic key; and
executing the first diagnostic item when verification succeeds.

5. The method according to claim 4, wherein the third diagnostic instruction further comprises a fifth ciphertext, the fifth ciphertext is obtained by encrypting an identifier of a second diagnostic item by the diagnostic apparatus by using the first diagnostic key, and executing the first diagnostic item comprises:
determining, based on the identifier of the first diagnostic key, an identifier of a diagnostic item supported by the first diagnostic key; and
executing the first diagnostic item when the identifier of the second diagnostic item is comprised in the identifier of the diagnostic item supported by the first diagnostic key.

6. The method according to any one of claims 1 to 5, wherein the first diagnostic item is a target diagnostic item in at least one diagnostic item, different target diagnostic items have different first diagnostic keys, and the at least one diagnostic item is an item requested by the diagnostic apparatus to diagnose.

7. The method according to claim 6, wherein the target diagnostic item is an authorized diagnostic item in the at least one diagnostic item.

8. The method according to claim 6 or 7, wherein the method further comprises:
displaying a second interface, wherein the second interface comprises identifiers of a plurality of to-be-selected diagnostic items; and
in response to an operation of selecting an identifier of the at least one diagnostic item on the second interface by a user, determining that the first diagnostic instruction is received.

9. A vehicle diagnostic method, applied to a diagnostic apparatus, wherein the method comprises:
sending a first diagnostic application to a diagnostic authorization apparatus in response to a first diagnostic instruction, wherein the first diagnostic application comprises a first public key;
receiving a first ciphertext from the diagnostic authorization apparatus, wherein the first ciphertext is obtained by encrypting a first diagnostic key of a first diagnostic item based on the first public key;
executing the first diagnostic item in collaboration with a vehicle based on the first diagnostic key;
sending a second diagnostic application to the diagnostic authorization apparatus in response to a second diagnostic instruction, wherein the second diagnostic application comprises a second public key, and the second public key is different from the first public key;
receiving a second ciphertext from the diagnostic authorization apparatus, wherein the second ciphertext is obtained by encrypting a second diagnostic key of the first diagnostic item based on the second public key, and the second diagnostic key is different from the first diagnostic key; and
executing the first diagnostic item in collaboration with the vehicle based on the second diagnostic key.

10. The method according to claim 9, wherein before executing the first diagnostic item in collaboration with the vehicle based on the first diagnostic key, the method further comprises:
receiving a third ciphertext from the diagnostic authorization apparatus, wherein the third ciphertext is obtained by encrypting the first diagnostic key based on a preset encryption key; and
sending the third ciphertext to the vehicle; and
before executing the first diagnostic item in collaboration with the vehicle based on the second diagnostic key, the method further comprises:
receiving a fourth ciphertext from the diagnostic authorization apparatus, wherein the fourth ciphertext is obtained by encrypting the second diagnostic key based on the preset encryption key; and
sending the fourth ciphertext to the vehicle.

11. The method according to claim 9 or 10, wherein the first diagnostic instruction indicates at least one diagnostic item, and the first diagnostic application further comprises an identifier of the at least one diagnostic item; and
the first diagnostic item is a target diagnostic item in the at least one diagnostic item, and different target diagnostic items have different first diagnostic keys.

12. The method according to claim 11, wherein the target diagnostic item is an authorized diagnostic item.

13. The method according to claim 11 or 12, wherein before sending the first diagnostic application to the diagnostic authorization apparatus in response to the first diagnostic instruction, the method further comprises:
displaying a first interface, wherein the first interface comprises identifiers of a plurality of to-be-selected diagnostic items; and
in response to an operation of selecting the identifier of the at least one diagnostic item on the first interface by a user, determining that the first diagnostic instruction is received.

14. The method according to any one of claims 9 to 13, wherein responding to the first diagnostic instruction further comprises:
generating a first public-private key pair, wherein the first public-private key pair comprises the first public key and a first private key; and
executing the first diagnostic item in collaboration with the vehicle based on the first diagnostic key comprises:
decrypting the first ciphertext by using the first private key, to obtain the first diagnostic key; and
sending a third diagnostic instruction to the vehicle, wherein the third diagnostic instruction comprises an identifier of the first diagnostic key, and the third diagnostic instruction indicates the vehicle to execute the first diagnostic item.

15. The method according to claim 14, wherein the third diagnostic instruction further comprises a fifth ciphertext, and after obtaining the first diagnostic key, the method further comprises:
encrypting an identifier of a second diagnostic item by using the first diagnostic key, to obtain the fifth ciphertext, wherein the second diagnostic item is the same as or different from the first diagnostic item.

16. The method according to any one of claims 11 to 13, wherein the first diagnostic application comprises an identifier of a first vehicle, and the second diagnostic application comprises the identifier of the first vehicle; or
the first diagnostic application comprises an identifier of the first vehicle, and the second diagnostic application comprises an identifier of a second vehicle.

17. The method according to claim 16, wherein the identifier of the at least one diagnostic item and the identifier of the first vehicle are comprised in a signature file, and before sending the first diagnostic application to the diagnostic authorization apparatus, the method further comprises:
signing the identifier of the at least one diagnostic item and the identifier of the first vehicle by using a preset private key, to obtain the signature file.

18. The method according to claim 10, wherein the first diagnostic application comprises an identifier of a first vehicle and an identifier of a second vehicle; and
the first ciphertext specifically comprises a ciphertext obtained by encrypting the first diagnostic key of the first diagnostic item of the first vehicle based on the first public key, and a ciphertext obtained by encrypting the first diagnostic key of the first diagnostic item of the second vehicle based on the first public key, wherein the first diagnostic key of the first diagnostic item of the first vehicle is different from the first diagnostic key of the first diagnostic item of the second vehicle.

19. A vehicle diagnostic method, applied to a diagnostic authorization apparatus, wherein the method comprises:
receiving a first diagnostic application from a diagnostic apparatus, wherein the first diagnostic application comprises a first public key;
generating a first diagnostic key of a first diagnostic item;
encrypting the first diagnostic key by using the first public key, to obtain a first ciphertext;
sending the first ciphertext to the diagnostic apparatus;
receiving a second diagnostic application from the diagnostic apparatus, wherein the first diagnostic application comprises a second public key, and the second public key is different from the first public key;
generating a second diagnostic key of the first diagnostic item, wherein the second diagnostic key is different from the first diagnostic key;
encrypting the second diagnostic key by using the second public key, to obtain a second ciphertext; and
sending the second ciphertext to the diagnostic apparatus.

20. The method according to claim 19, wherein after generating the first diagnostic key of the first diagnostic item, the method further comprises:
encrypting the first diagnostic key by using a preset encryption key, to obtain a third ciphertext; and
sending the third ciphertext to a vehicle; and
after generating the second diagnostic key of the first diagnostic item, the method further comprises:
encrypting the second diagnostic key by using the preset encryption key, to obtain a fourth ciphertext; and
sending the fourth ciphertext to the vehicle.

21. The method according to claim 19 or 20, wherein the first diagnostic application further comprises an identifier of at least one diagnostic item, the first diagnostic item is a target diagnostic item in the at least one diagnostic item, and different target diagnostic items have different first diagnostic keys.

22. The method according to claim 21, wherein the target diagnostic item is an authorized diagnostic item in the at least one diagnostic item.

23. The method according to claim 22, wherein the first diagnostic application further comprises an identifier of a first vehicle, and before generating the first diagnostic key of the first diagnostic item, the method further comprises:
determining the target diagnostic item in the at least one diagnostic item based on authorization information of the first vehicle and/or user authorization information, wherein the authorization information of the first vehicle indicates an authorized diagnostic item of the first vehicle, and the user authorization information indicates a diagnostic item that is of the first vehicle and that is authorized by a user.

24. The method according to claim 23, wherein the identifier of the at least one diagnostic item and the identifier of the first vehicle are comprised in a signature file, the signature file is obtained by signing based on a preset private key, and after receiving the first diagnostic application from the diagnostic apparatus, the method further comprises:
performing signature verification on the signature file by using a preset public key; and
generating the first diagnostic key of the first diagnostic item comprises:
generating the first diagnostic key of the first diagnostic item in response to success of signature verification.

25. The method according to any one of claims 19 to 22, wherein the first diagnostic application further comprises an identifier of a first vehicle, and the second diagnostic application comprises the identifier of the first vehicle; or
the first diagnostic application comprises an identifier of the first vehicle, and the second diagnostic application comprises an identifier of a second vehicle.

26. The method according to any one of claims 19 to 22, wherein the first diagnostic application further comprises an identifier of a first vehicle and an identifier of a second vehicle, the first diagnostic key of the first diagnostic item comprises the first diagnostic key of the first diagnostic item of the first vehicle, and the first diagnostic key of the first diagnostic item of the second vehicle, and the first diagnostic key of the first diagnostic item of the first vehicle is different from the first diagnostic key of the first diagnostic item of the second vehicle.

27. A vehicle diagnostic system, comprising a vehicle configured to perform the method according to any one of claims 1 to 8, a diagnostic apparatus configured to perform the method according to any one of claims 9 to 18, and a diagnostic authorization apparatus configured to perform the method according to any one of claims 19 to 26.

28. A vehicle diagnostic apparatus, comprising modules configured to perform the method according to any one of claims 1 to 26.

29. An electronic device, comprising a processor and a memory, wherein
the memory stores computer instructions; and
the processor executes the computer instructions stored in the memory, so that the processor performs the method according to any one of claims 1 to 26.

30. A computer-readable storage medium, wherein the computer-readable storage medium stores a computer program or instructions, and when the computer program or the instructions are run, the method according to any one of claims 1 to 26 is implemented.
